(19) 

Europäisches
Patentamt
European
Patent Office
Office européen
des brevets

(11) **EP 4 207 755 B1**

(12) **EUROPEAN PATENT SPECIFICATION**

(45) Date of publication and mention
of the grant of the patent:
**11.06.2025 Bulletin 2025/24**

(21) Application number: **23158058.0**

(22) Date of filing: **11.11.2020**

(51) International Patent Classification (IPC):
*H04N 9/73* (2023.01)     *G06N 3/04* (2023.01)
*G06N 3/08* (2023.01)     *G06F 3/04845* (2022.01)
*G06F 3/04847* (2022.01)     *G06N 3/045* (2023.01)

(52) Cooperative Patent Classification (CPC):
**H04N 9/73; G06F 3/04845; G06F 3/04847;
G06N 3/045; G06N 3/08;** G06N 3/048

(54) **METHOD AND APPARATUS FOR DEEP LEARNING BASED WHITE-BALANCING EDITING**

VERFAHREN UND VORRICHTUNG ZUR BEARBEITUNG DES WEISSABGLEICHS AUF DER
BASIS VON DEEP LEARNING

PROCÉDÉ ET APPAREIL DE MODIFICATION D'ÉQUILIBRAGE DES BLANCS À APPRENTISSAGE
PROFOND

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2019 US 201962939286 P
22.10.2020 US 202017077837**

(43) Date of publication of application:
**05.07.2023 Bulletin 2023/27**

(62) Document number(s) of the earlier application(s) in
accordance with Art. 76 EPC:
**20889398.2 / 4 054 185**

(73) Proprietor: **Samsung Electronics Co., Ltd.**
**Suwon-si, Gyeonggi-do 16677 (KR)**

(72) Inventors:
• **AFIFI, Mahmoud Nasser Mohammed**
**California, 94043 (US)**
• **BROWN, Michael Scott**
**California, 94043 (US)**

(74) Representative: **Appleyard Lees IP LLP**
**15 Clare Road**
**Halifax HX1 2HY (GB)**

(56) References cited:
CN-A- 109 348 206     US-A1- 2004 126 012
US-A1- 2008 062 273     US-A1- 2009 067 711
US-A1- 2015 310 794     US-A1- 2016 284 095
US-A1- 2019 045 163

• AFIFI MAHMOUD ET AL: "Deep White-Balance
Editing", 2020 IEEE/CVF CONFERENCE ON
COMPUTER VISION AND PATTERN
RECOGNITION (CVPR), IEEE, 13 June 2020
(2020-06-13), pages 1394 - 1403, XP033804737,
DOI: 10.1109/CVPR42600.2020.00147
• ZHETONG LIANG ET AL: "CameraNet: A Two-
Stage Framework for Effective Camera ISP
Learning", ARXIV.ORG, CORNELL UNIVERSITY
LIBRARY, 201 OLIN LIBRARY CORNELL
UNIVERSITY ITHACA, NY 14853, 5 August 2019
(2019-08-05), XP081455641

# Description

## TECHNICAL FIELD

Methods and apparatuses according to embodiments of the disclosure relate to deep white-balancing editing.

## BACKGROUND ART

White balance ("WB") refers to low-level computer vision tasks applied to all camera images. WB is performed to represent scene objects with the same colors even when the scene objects are photographed under different lighting conditions. Conceptually, WB is performed to normalize a lighting effect to be added to a captured image of a scene so that it may appear that images of all objects are captured under ideal "white light". WB is one of initial color manipulation operations applied to an unprocessed raw-RGB image from a sensor by a camera's onboard integrated signal processor ("ISP"). After WB is performed, additional color rendering operations are applied by the ISP to additionally process the raw-RGB image by final standard RGB (sRGB) encoding.

WB aims to normalize the lighting effect to be added to a scene but in some cases, the ISP incorporates aesthetic considerations into color rendering, based on photographic preferences. The photographic preferences are not always based on the white-light assumption and may vary according to various factors such as cultural preference and scene content.

Most digital cameras provide an option for controlling a WB setting during capturing of an image (or shooting). However, once the WB setting is selected and an image is completely processed by final sRGB by the ISP, it is difficult to perform WB editing without access to an unprocessed original raw-RGB image. This problem worsens when the WB setting is incorrect, thereby causing a strong color cast to occur in a final sRGB image.

A function of editing WB in a sRGB image is useful not only in photography tasks but also in computer vision applications such as object recognition, scene understanding and color augmentation.

Recent studies show that an image captured with an incorrect WB setting produces an effect similar to an untargeted adversarial attack on deep neural network ("DNN") models.

To understand difficulties with WB editing of sRGB images, it is useful to review a method of performing a WB by a camera. WB includes two operations performed in tandem by the ISP: (1) estimating a response of a camera sensor to scene illumination in the form of raw-RGB vector; and (2) dividing R, G and B color channels of colors of a raw-RGB image by a corresponding channel response of the raw-RGB vector.

A first operation of estimating an illumination vector includes an auto white balance ("AWB") process of a camera. In addition to the AWB, a user may manually select one WB presetting from among WB presettings, for which a raw-RGB vector for each camera is determined by a camera manufacturer, when most cameras are used. The presettings correspond to general scene illumination (e.g., daylight, shade, and incandescent light).

When a raw-RGB vector of scene illumination is defined, linear scaling is individually and independently applied to each color channel so as to normalize illumination. Such scaling work is performed using a 3x3 diagonal matrix. Actually, a white-balance (or white-balanced) raw-RGB image is additionally processed by a large number of ISP operations for each non-linear camera for rendering a final image in an output reference color space, i.e., a sRGB color space. Such nonlinear work makes it difficult to use traditional diagonal correction for correcting an image rendered with a strong color cast due to camera WB errors.

To perform correct post-capture WB editing, a rendered sRGB value should be appropriately inverted to obtain a corresponding unprocessed raw-RGB value and be thereafter rendered again (or re-rendered). This can be achieved by accurate radiometric calibration methods of calculating metadata for color de-rendering. A recent study has proposed a method of directly correcting a sRGB image captured with an incorrect WB setting. This study has introduced exemplar-based framework using a large-scale data set including more than 60,000 sRGB images rendered by software camera pipeline due to the incorrect WB setting. Each sRGB image includes a corresponding sRGB image rendered with a correct WB setting. When an input image is given, a data set is searched for to detect similar images by using a k-nearest neighbor ("KNN") strategy and a mapping function for a corresponding correct WB image is calculated. This study shows that aforementioned color mapping calculated from exemplars is effective in correcting the input image. Afterward, in this study, a KNN idea was expanded to map a correct WB image to erroneous views for image augmentation for training a deep neural network.

US 2008/0062273 A1 describes a photographing apparatus that includes an imaging sensor, a memory, and a display unit. The imaging sensor obtains image data. The memory stores the image data. The display unit indicates a still picture based on the image data and a white balance setting picture on the still picture. The white balance setting picture is used for setting a white balance gain in a white balance adjustment.

US 2004/0126012 A1 describes a digital camera, that carries out processing such as first AWE processing and chroma enhancement processing on original image data obtained by photographing, to obtain output image data. The output image data are then input to a printer. In the printer, processing which is the inverse of processing carried out in processing means of the digital camera and inverse AWE processing which is the inverse of the first AWE processing is carried out on the output image data, and inverse AWE image data which can be regarded as the original image data are obtained. Processed image data are then obtained by carrying out second AWE processing different from the first AWE processing on the inverse AWE image data, and a print is generated by output means based on the processed image data.

US 2019/0045163 A1 describes a system, article, and method to perform deep learning based automatic white balancing that uses a neural network in conjunction with other non-neural network automatic white balancing algorithms.

US 2016/0284095 A1 describes methods, apparatuses and systems that can be used to operate a machine learning device by obtaining training image data, conducting an offline prediction analysis of the training image data with respect to one or more real-time parameters of an image capture device, and generating one or more parameter detection models based on the offline prediction analysis. Additionally, it describes methods, apparatuses and systems that can be used to operate the image capture device by obtaining a candidate image associated with the image capture device, determining that the candidate image corresponds to a particular type of scene represented in a parameter prediction model, and adjusting one or more real-time parameters of the image capture device based at least in part on one or more parameter values associated with the particular type of scene.

CN 109348206 A describes an image white balance processing method, device, storage medium, and mobile terminal.

US 2015/0310794 A1 describes techniques for calibrating and adjusting the white point of a display. The techniques for calibrating and adjusting the white point of a display may receive data indicative of a target color temperature for a white point of a display, and provide one or more user interface components that allow a user to select between multiple different candidate white points where each of the of the candidate white points has a correlated color temperature that corresponds to the target color temperature Different target white points for a display may exhibit different levels of luminance loss and/or tint. The techniques for calibrating and adjusting the white point of a display may allow a user to evaluate the trade-off between the luminance loss characteristics and/or tint characteristics of different white points.

US 2009/0067711 A1 describes a color processing apparatus and method in which a setting unit inputs a plurality of viewing conditions of the output side of an image. A calculation unit sets a viewing condition used to calculate an ambient light parameter, based on the plurality of viewing conditions, and calculates an ambient light parameter based on the set viewing condition. A conversion unit performs inverse conversion of a color appearance model to color data by using the ambient light parameter.

Zhetong Liang et al, "CameraNet: A Two-Stage Framework for Effective Camera ISP Learning," in IEEE Transactions on Image Processing, vol. 30, pp. 2248-2262, 2021, doi: 10.1109/TIP.2021.3051486 describes a CNN model that can address the multiple tasks inside an ISP pipeline simultaneously. This framework includes two CNN modules to account for two sets of relatively uncorrelated subtasks in an ISP pipeline, one for restoration and another for enhancement.

## DESCRIPTION OF EMBODIMENTS

### TECHNICAL PROBLEM

Methods and apparatuses according to embodiments of the disclosure relate to deep white-balancing editing.

### SOLUTION TO PROBLEM

The invention is set out in the appended set of claims.

Embodiments of the disclosure provide a method and an apparatus for deep white-balancing editing.

An aspect of the disclosure provides an apparatus for deep white-balancing editing, the apparatus including a memory storing instructions, and at least one processor configured to execute the instructions to obtain an input image with an original white balance corrected by image signal processing and obtain an intermediate representation, of the obtained input image with the original white balance that is not corrected by the image signal processing, by using a first neural network. The at least one processor may be further configured to execute the instructions to obtain a first output image with a first white balance different from the original white balance by using a second neural network, based on the obtained intermediate representation.

An aspect of the disclosure provides a deep white-balancing editing method performed by at least one processor, the method including obtaining an input image with an original white balance corrected by image signal processing and obtaining an intermediate representation of the input image that is not corrected by the image signal processing by using a first neural network. The method may further include obtaining a first output image with a first WB different from the original WB by using a second neural network, based on the obtained intermediate representation.

According to an aspect of the disclosure, there is provided a computer-readable recording medium storing instructions, when executed by at least one processor for deep white-balancing editing, perform the following operations. The instructions may be executed by the at least one processor to obtain an input image with an original white balance by image signal processing and obtaining an intermediate representation of the obtained input image with the original white balance that is not corrected by the image signal processing. The instructions may be further executed by the at least one processor to obtain a first output image with a first white balance different from the original white balance by using a second neural network, based on the obtained intermediate representation.

Although the method, the apparatus, and the computer-readable recording medium have been individually described above, the description is not intended to limit a range or function of usage thereof. In practice, the method, the apparatus, and the computer-readable recording medium may be combined with other aspects of the disclosure.

## BRIEF DESCRIPTION OF DRAWINGS

The above-described aspects, other aspects and features of embodiments of the disclosure will become more apparent from the following description taken with the accompanying drawings.

FIG. 1 is a block diagram of a deep white-balancing editing apparatus according to embodiments of the disclosure.

FIG. 2 is a block diagram of an encoder of the apparatus for deep white-balancing editing of FIG. 1.

FIG. 3 is a block diagram of a first white balancing (WB) decoder of the apparatus for deep white-balancing editing of FIG. 1.

FIG. 4 is a block diagram of a second WB decoder of the apparatus for deep white-balancing editing of FIG. 1.

FIG. 5 is a flowchart of a deep white-balancing editing method according to embodiments of the disclosure.

FIG. 6 is a flowchart of a training method for deep white-balancing editing according to embodiments of the disclosure.

FIG. 7 is a diagram of a color mapping process in a deep white-balancing editing method according to embodiments of the disclosure.

FIG. 8 is a flowchart of a deep white-balancing editing method according to other embodiments of the disclosure.

FIG. 9 is a diagram of a user interface for deep white-balancing editing according to embodiments of the disclosure.

FIG. 10 is a block diagram of a computer system according to embodiments of the disclosure.

FIG. 11 is a block diagram of a mobile device according to an embodiment of the disclosure.

FIG. 12 is a diagram for describing identifying whether the mobile device is located indoors or outdoors, based on various types of information obtained by a mobile device, and performing WB control, based on a result of the identification.

## MODE OF DISCLOSURE

Embodiments of the disclosure provide a method and an apparatus for deep white-balancing editing.

Specifically, a deep learning approach for realistic editing of white balance (WB) of a sRGB image will be introduced herein. An image from a sensor, which is rendered by sRGB color space encoding by an integrated signal processor (ISP), is captured by a camera. Rendering performed by the ISP starts with a WB process used to remove a color cast in scene illumination. Thereafter, the ISP applies a series of nonlinear color manipulation operations to improve visual quality of a final sRGB image. A recent study showed that a sRGB image rendered with incorrect WB cannot be easily corrected by nonlinear rendering of an ISP. This study proposed a k-nearest neighbor (KNN) solution based on tens of thousands of image pairs. However, an ISP may erroneously correct WB of an image at an initial stage of a process, and this error may propagate in the entire process even in the KNN solution.

In the above-described embodiments of the disclosure, this problem may be fixed using a DNN architecture trained by an end-to-end method to learn exact WB. The DNN architecture maps an input image to two WB settings corresponding to indoor illumination and outdoor illumination. The above-described embodiments of the disclosure are more exact than a KNN approach method in terms of correcting an incorrect WB setting and provide a user with freedom of editing WB of a sRGB image to other illumination settings.

The above-described embodiments of the disclosure provide a deep learning framework permitting realistic post-capture WB editing of a sRGB image. The framework includes a single encoder network combined with three decoder networks targeted to the following WB settings: (1) a "correct" AWB setting; (2) an indoor WB setting; and (3) an outdoor WB setting. A first decoder may edit a sRGB image with incorrectly controlled WB to have correct WB. The framework is useful for post-capture WB correction. Additional indoor and outdoor decoders provide users with a function of blending two outputs of the decoders to create a wide range of WB appearances. This function supports photo editing work for controlling aesthetic WB properties of an image. The framework is easy to be generalized with respect to images other than training data and allows a latest result to be obtained with respect to the work described above.

The disclosure permits a variety of modifications and a plurality of examples and thus the above embodiments of the disclosure will be illustrated in the drawings and described in detail here.

A detailed description of the above-described embodiments of the disclosure will be omitted herein when it is determined that the essence of the disclosure would be obscure due to a detailed description of relevant technologies. Numbers (e.g., first, second, etc.) used herein are identifier codes for distinguishing one element from another.

It will be understood by those of ordinary skill in the art that when elements are referred to as being "connected" or "coupled" to each other, the elements are directly connected or coupled to each other or connected to each other with another element therebetween unless stated otherwise.

Each element described herein may additionally perform part of or all of functions of other elements, as well as a function thereof, or a major function of each element may be performed entirely by another element.

In the present specification, the term "image" may be understood to mean a still image, a moving picture including a series of still images (or frames), or a video. The image may be a two-dimensional (2D) or three-dimensional (3D) image.

In the present specification, the term "neural network" refers to a representative example of an artificial intelligence (AI) model but the above-described embodiments are not limited to an AI model using an algorithm.

In the present specification, the term "parameter" or "neural network parameter" may be understood to mean a value used during operation of each layer of a neural network and may include, for example, a weight used when an input value is applied to an operation expression. Here, the parameter may be expressed in a matrix form. The parameter is a value set as a result of training and may updated through training data when needed.

Throughout the disclosure, the expression "at least one of a, b or c" indicates only a, only b, only c, both a and b, both a and c, both b and c, all of a, b, and c, or variations thereof.

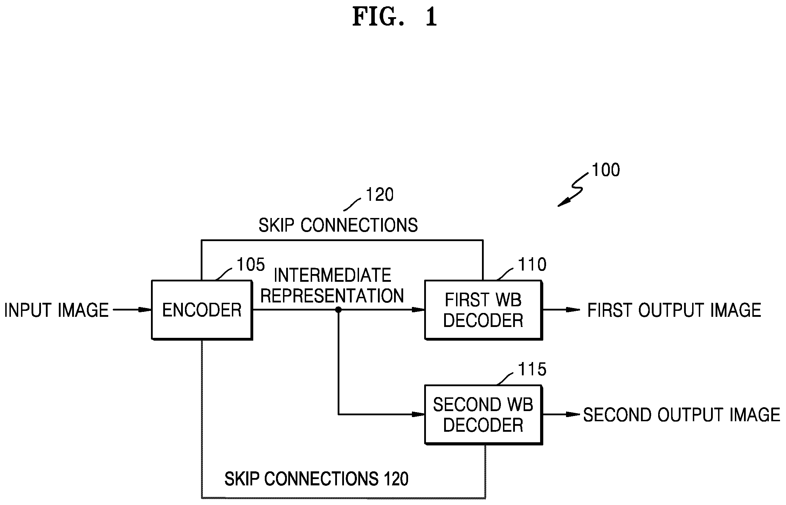

FIG. 1 is a block diagram of an apparatus 100 for deep white-balancing editing according to embodiments of the disclosure.

Referring to FIG. 1, the apparatus 100 includes an encoder 105, a first WB decoder 110, and a second WB decoder 115.

The apparatus 100 may be embodied as an electronic device (e.g., a mobile device) and/or a server.

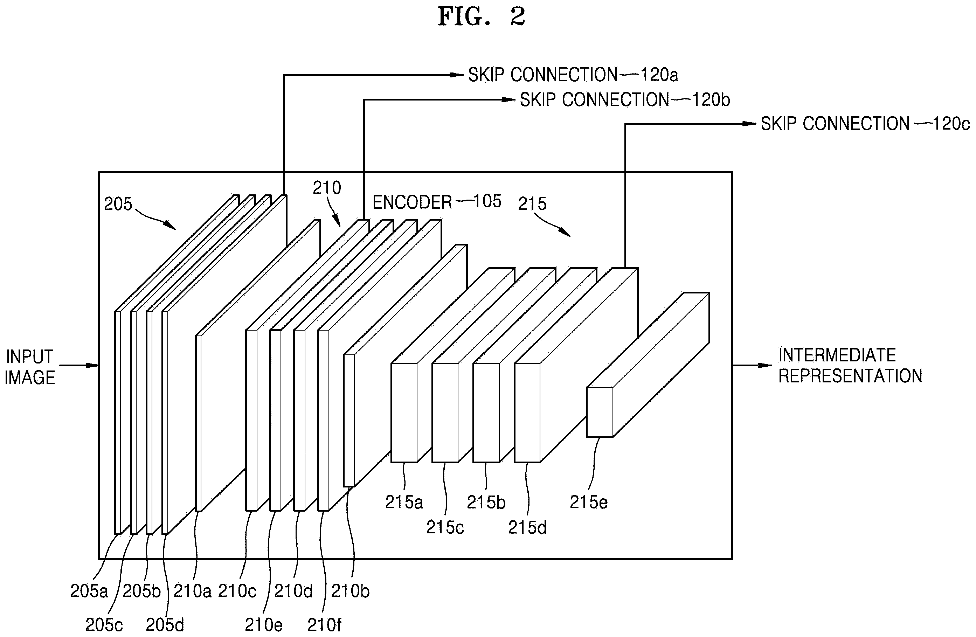

The encoder 105 is configured to obtain (or receive) an input image (e.g., a sRGB image) with an original WB corrected by image signal processing by an ISP of a camera. The encoder 105 is also configured to obtain and transmit an intermediate representation of the obtained input image, and the intermediate representation has the original WB that is not corrected by image signal processing. The encoder 105 includes, for example, a neural network such as a convolutional network (CNN) or a deep neural network (DNN) to be described with reference to FIG. 2 below.

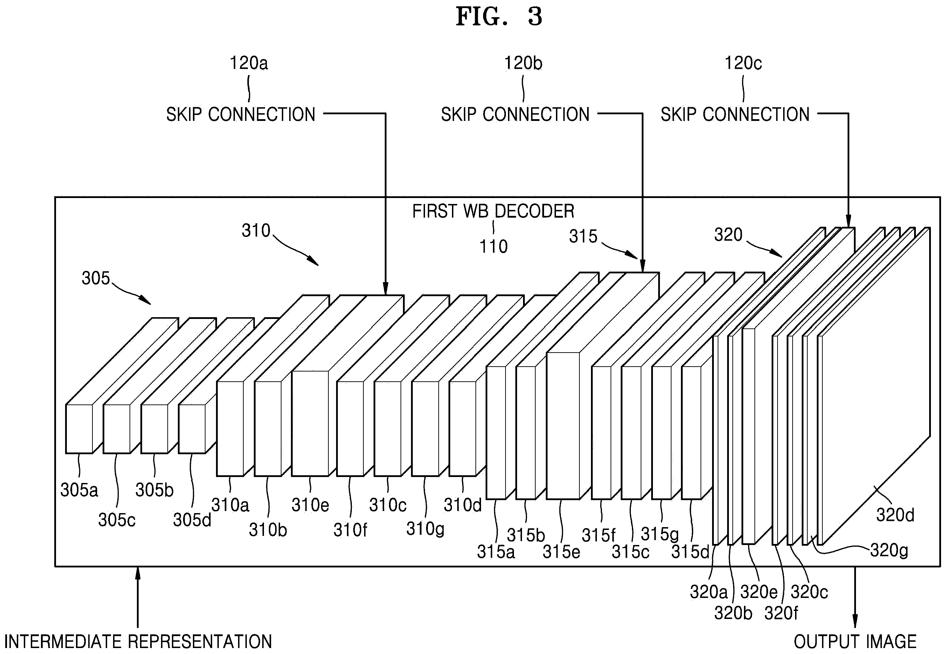

The first WB decoder 110 is configured to obtain and transmit a first output image with first WB different from the original WB, based on the obtained intermediate representation. The first WB decoder 110 may include, for example, a neural network such as a CNN or a DNN, as described with reference to FIG. 3 below. For example, the first WB may be auto white balance (AWB).

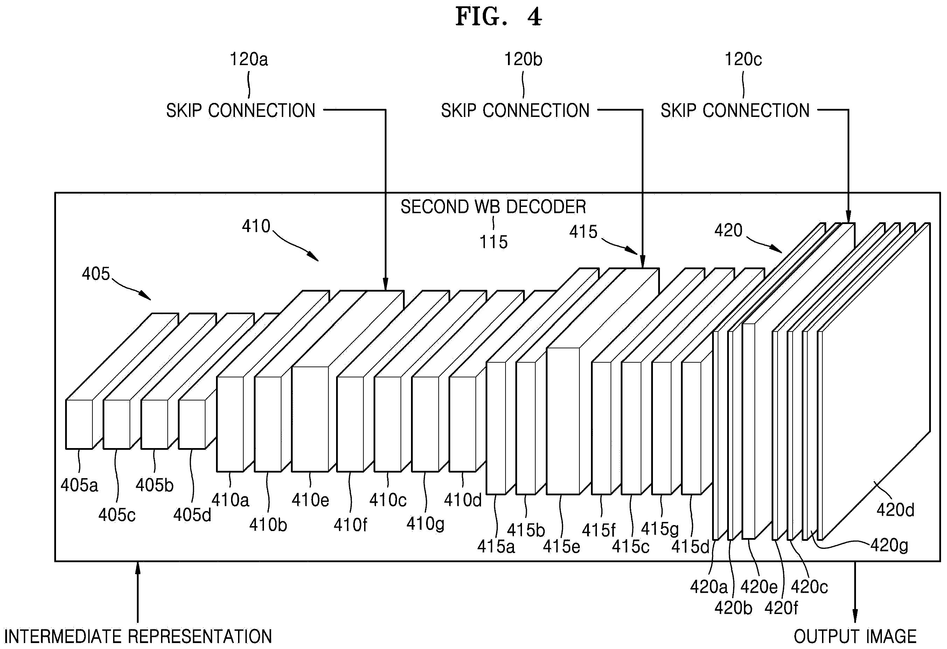

The second WB decoder 115 is configured to obtain and transmit a second output image with second WB different from the original WB and the first WB, based on the obtained intermediate representation. The second WB decoder 115 may include, for example, a neural network such as a CNN or a DNN, as described with reference to FIG. 4 below. The second WB may be, for example, shade WB correlated to 2850K (K) or incandescent WB correlated to 7500K color temperatures.

Specifically, when an input sRGB image $I_{WB(in)}$ rendered with WB setting $WB_{(in)}$ by an ISP of an unknown camera is considered, colors of the input sRGB image $I_{WB(in)}$ are edited so that the input sRGB image $I_{WB(in)}$ may appear to be re-rendered with target WB setting $WB_{(t)}$.

When an unprocessed original raw-RGB image is available, the work described above may be accurately performed. When unprocessed original raw-RGB values are reconstructed, the WB setting $WB_{(in)}$ may be changed to the target WB setting $WB_{(t)}$ and thereafter the sRGB image may be re-rendered by a software-based ISP to restore to an original sRGB color space. This process may be described by the following equation:

[Equation 1]

$$I_{WB(t)}=G \circ F(I_{WB(in)})$$

F: $I_{WB(in)}$ -> $D_{WB(in)}$ denotes an unknown reconstruction function for restoring a camera-rendered sRGB image to a corresponding raw-RGB image D to which the WB setting $WB_{(in)}$ is applied.

G: $D_{WB(in)}$ -> $I_{WB(t)}$ denotes an unknown camera-rendered function for editing the WB setting $WB_{(in)}$ and re-rendering a final sRGB image $I_{WB(t)}$. Symbol '∘' denotes combining of the functions.

The process aims to model a function of G·F to produce the final sRGB image $I_{WB(t)}$. First, how the functions G and F cooperate with each other to produce the final sRGB image $I_{WB(t)}$ is analyzed. From Equation 1 above, the function G receives an intermediate representation, renders the intermediate representation by sRGB color space encoding to have a target WB setting

$WB_{(t)}$, and the function F transforms an input sRGB image $I_{WB(in)}$ into an intermediate representation (i.e., a raw-RGB image D with a captured WB setting).

Due to nonlinearity applied to a rendering chain of an ISP, the function G may be regarded as a hybrid function including a set of sub-functions, and each of the sub-functions renders the intermediate representation with a certain WB setting.

The process aims to produce the final sRGB image $I_{WB(t)}$ with the target WB setting $WB_{(t)}$ rather than reconstructing/re-rendering an original raw-RGB value. Therefore, the function of G·F may be modeled with a encoder/decoder scheme. Decoders $g_1$ and $g_2$, ... (i.e., the first and second WB decoders 110 and 115) produce final SRGB images with different WB settings, whereas an encoder f (i.e., the encoder 105 of FIG. 1) transmits the input sRGB image $I_{WB(in)}$ as a latent representation. Similar to Equation (1), the framework may be formulated as follows:

[Equation 2]

$$\hat{I}_{WB(t)} = g_1 \circ f(I_{WB(in)})$$

$f: I_{WB(in)} \rightarrow Z, g_t: Z \rightarrow \hat{I}_{WB(t)}$, and Z may denote an intermediate representation (i.e., a latent representation) of an input original sRGB image $I_{WB(in)}$.

As in a case of Equation 1 above, the process aims to change a function $g_t$ into a new function $g_y$ targeted to another WB setting $WB_y$, so that the functions f and $g_t$ may be independent of each other without requiring a change of the function f.

In embodiments of the disclosure, the following three different WB settings are targeted:

(i) $WB_{(A)}$: appropriate illumination for a scene of an AWB-captured image;

(ii) $WB_{(T)}$: tungsten/incandescent-WB for indoor illumination; and

(iii) $WB_{(S)}$: shade-WB for outdoor illumination.

Therefore, three different types of decoders $g_A$, $g_T$ and $g_S$ for producing output images corresponding to the AWB, the incandescent WB, and the shade WB are generated.

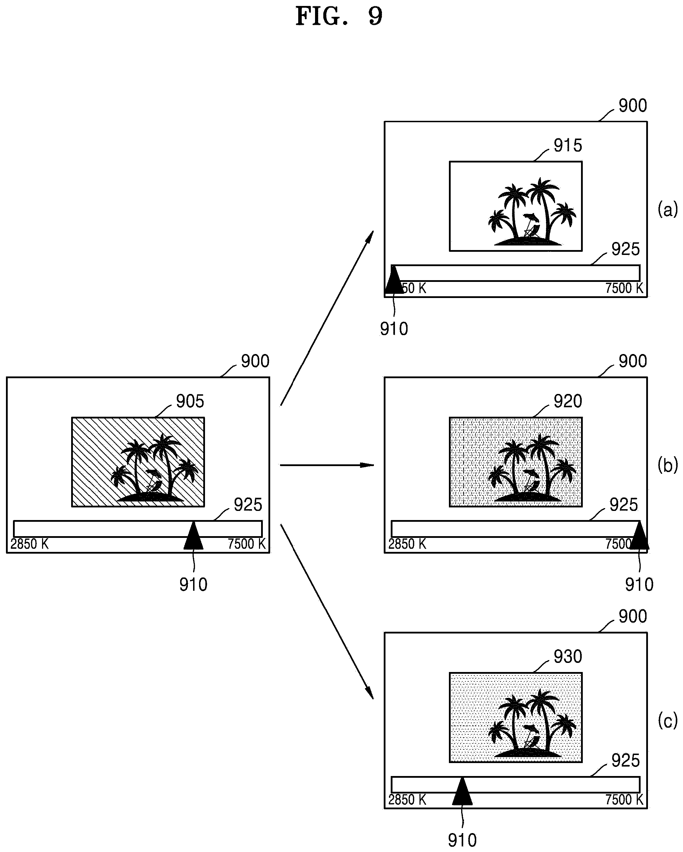

The incandescent WB and the shade WB are selected according to color properties. This can be understood when considering illumination in terms of correlation color temperature. For example, the incandescent and shade WB settings are related to color temperatures 2850K and 7500K, respectively. A wide range of illumination color temperatures is considered as a range of pleasing illuminations. In addition, a wide color temperature range between the incandescent WB and the shade WB permits an approximate value of an image within color temperatures within this range through interpolation. The details of such an interpolation process will be described in FIG. 9 below. In an AWB mode, a correlated color temperature varies according to an illumination condition of an input image and thus is not fixed.

Referring back to FIG. 1, an overview of the DNN architecture is illustrated. A U-Net architecture may be used together with a multi-scale skip connection 120 between the encoder 105 and the first and second WB decoders 110 and 115. A framework includes two main units. A first main unit is the encoder 105, which is a 4-level encoder unit for extracting a multi-scale latent representation (intermediate representation) of an input image. A second main unit includes at least two 4-level decoders (e.g., the first and second WB decoders 110 and 115). The main units have different bottle necks and different upsampling components. Each convolutional layer has 24 channels at a first level of the encoder 105 and a last layer of each of the first and second WB decoders 110 and 115. The number of channels of each convolutional layer is double the number of channels at each subsequent or previous level. (For example, the third level of the encoder 105 has 192 channels for each convolution layer)

FIG. 2 is a block diagram of the encoder 105 of the apparatus 100 for deep white-balancing editing of FIG. 1.

Referring to FIG. 2, the encoder 105 may include a first level 205, a second level 210, and a third level 215. An input image may be transmitted through each layer of the first level 205, the second level 210, and the third level 215 to obtain an intermediate representation output from the first WB decoder 110 and/or the second WB decoder 115.

The first level 205 may include 3x3 convolutional layers 205a and 205b with a stride 1 and a padding 1, and rectified linear unit (ReLU) layers 205c and 205d. The ReLU layer 205c may be located between the convolutional layers 205a and 205b, and the convolutional layer 205b may be located between the ReLU layers 205c and 205d. For example, the convolutional layers 205a and 205b and the ReLU layers 205c and 205d may each have a size of 128x128x24.

The second level 210 may include 2x2 max-pooling layers 210a and 210b with a stride 1, 3x3 convolutional layers 210c and 210d with a stride 1 and a padding 1, and ReLU layers 210e and 210f. The ReLU layer 210e may be located between the convolutional layers 210c and 210d, the convolutional layer 210d may be located between the ReLU layers 210e and 210f, and the convolutional layers 210c and 210d and the ReLU layers 210e and 210f may be located between the max-pooling layers 210a and 210b. For example, the convolutional layers 210c and 210d and the ReLU layers 210e and 210f may each have a size of 64x64x48, the max-pooling layer 210a may have a size of 64x64x24, and the max-pooling layer 210b may have a size of 32x32x48.

The third level 215 may include 3x3 convolutional layers 215a and 215b with a stride 1 and a padding 1, ReLU layers 215c and 215d, and a 2x2 max-pooling layer 215e with a stride 2. The ReLU layer 215c may be located between the convolutional layers 215a and 215b, the convolutional layer 215b may be located between the ReLU layers 215c and 215d, and the max-pooling layer 215e may be located behind the convolutional layers 215a and 215b and the ReLU layers 215c and 215d. For example, the convolutional layers 215a and 215b and the ReLU layers 215c and 215d may each have a size of 16x16x192, and the max-pooling layer 215e have a size of 8x8x192.

FIG. 3 is a block diagram of the first WB decoder 110 of the apparatus 100 for deep white-balancing editing of FIG. 1.

Referring to FIG. 3, the first Wb decoder 110 includes a first level 305, a second level 310, a third level 315, and a fourth level 320. An intermediate representation may be transmitted through each layer of the first level 305, the second level 310, the third level 315, and the fourth level 320 to obtain a first output image.

The first level 305 may include ReLU layers 305a and 305b, and 3x3 convolutional layers 305c and 305d with a stride 1 and a padding 1. The convolutional layer 305c may be located between the ReLU layers 305a and 305b, and the ReLU layer 305b may be located between the convolutional layers 305c and 305d. For example, the ReLU layers 305a and 305b and the convolutional layers 305c and 305d may each have a size of 8x8x384.

The second level 310 may include a 2x2 upsampling layer 310a, 3x3 convolutional layers 310b, 310c and 310d with a stride 1 and a padding 1, a depth concatenation layer 310e, and ReLU layers 310f and 310g. Layers of the second level 310 may be the upsampling layer 310a, the convolutional layer 310b, the depth concatenation layer 310e, the ReLU layer 310f, the convolutional layer 310c, the ReLU layer 310g, and the convolutional layer 310d that are arranged in a direction from an input to an output. For example, the upsampling layer 310a, the convolutional layers 310b, 310c, and 310d, and the ReLU layers 310f and 310g may each have a size of 16x16x192, and the depth concatenation layer 310e has a size of 16x16x384.

The third level 315 may include a 2x2 upsampling layer 315a, 3x3 convolutional layers 315b, 315c and 315d with a stride 1 and a padding 1, a depth concatenation layer 315e, and ReLU layers 315f and 315g. Layers of the third level 315 may be the upsampling layer 315a, the convolutional layer 315b, the depth concatenation layer 315e, the ReLU layer 315f, the convolutional layer 315c, the ReLU layer 315g, and the convolutional layer 315d that are arranged in a direction from an input to an output. For example, the upsampling layer 315a, the convolutional layers 315b, 315c, and 315d, and the ReLU layers 315f and 315g may each have a size of 64x64x48, and the depth concatenation layer 315e has a size of 64x64x96.

The fourth level 320 may include a 2x2 upsampling layer 320a, 3x3 convolutional layers 320b, 320c and 320d with a stride 1 and a padding 1, a depth concatenation layer 320e, ReLU layers 320f and 320g, and a 1x1 convolutional layer 320h with a stride 1 and a padding 1. Layers of the fourth level 320 may be the upsampling layer 320a, the convolutional layer 320b, the depth concatenation layer 320e, the ReLU layer 320f, the convolutional layer 320c, the ReLU layer 320g, the convolutional layer 320d, and the convolutional layer 320h that are arranged in a direction from an input to an output. For example, the upsampling layer 320a, the convolutional layers 320b, 320c, and 320d, and the ReLU layers 320f and 320g may each have a size of 128x128x24, the depth concatenation layer 320e may have a size of 128x128x48, and the convolutional layer 320h may have a size of 128x128x3.

FIG. 4 is a block diagram of the second WB decoder 115 of the apparatus 100 for deep white-balancing editing of FIG. 1.

Referring to FIG. 4, the second WB decoder 115 includes a first level 405, a second level 410, a third level 415, and a fourth level 420. An intermediate representation may be transmitted through each layer of the first level 405, the second level 410, the third level 415, and the fourth level 420 to obtain a second output image.

The first level 405 may include ReLU layers 405a and 405b and 3x3 convolutional layers 405c and 405d with a stride 1 and a padding 1. The convolutional layer 405c may be located between the ReLU layers 405a and 405b, and the ReLU layer 405b may be located between the convolutional layers 405c and 405d. For example, the ReLU layers 405a and 405b and the convolutional layers 405c and 405d may each have a size of 8x8x384.

The second level 410 may include a 2x2 upsampling layer 410a, 3x3 convolutional layers 410b, 410c and 410d with a stride 1 and a padding 1, a depth concatenation layer 410e, and ReLU layers 410f and 410g. Layers of the second level 410 may be the upsampling layer 410a, the convolutional layer 410b, the depth concatenation layer 410e, the ReLU layer 410f, the convolutional layer 410c, the ReLU layer 410g, and the convolutional layer 410d that are arranged in a direction from an input to an output. For example, the upsampling layer 410a, the convolutional layers 410b, 410c, and 410d, and the ReLU layers 410f and 410g may each have a size of 16x16x192, and the depth concatenation layer 410e has a size of 16x16x384.

The third level 415 may include a 2x2 upsampling layer 415a, 3x3 convolutional layers 415b, 415c and 415d with a stride 1 and a padding 1, a depth concatenation layer 415e, and ReLU layers 415f and 415g. Layers of the third level 415 may be the upsampling layer 415a, the convolutional layer 415b, the depth concatenation layer 415e, the ReLU layer 415f, the convolutional layer 415c, the ReLU layer 415g, and the convolutional layer 415d that are arranged in a direction from an input to an output. For example, the upsampling layer 415a, the convolutional layers 415b, 415c, and 415d, and the ReLU layers 415f and 415g may each have a size of 64x64x48, and the depth concatenation layer 415e has a size of 64x64x96.

The fourth level 420 may include a 2x2 upsampling layer 420a, 3x3 convolutional layers 420b, 420c and 420d with a stride 1 and a padding 1, a depth concatenation layer 420e, ReLU layers 420f and 420g, and a 1x1 convolutional layer 420h with a stride 1 and a padding 1. Layers of the fourth level 420 may be the upsampling layer 420a, the convolutional layer 420b, the depth concatenation layer 420e, the ReLU layer 420f, the convolutional layer 420c, the ReLU layer 420g, the convolutional layer 420d, and the convolutional layer 420h that are arranged in a direction from an input to an output. For example, the upsampling layer 420a, the convolutional layers 420b, 420c, and 420d, and the ReLU layers 420f and 420g may each have a size of 128x128x24, the depth concatenation layer 420e may have a size of 128x128x48, and the convolutional layer 420h may have a size of 128x128x3.

Referring to FIGS. 2 to 4, a skip connection 120a may connect the first level 205 of the encoder 105 to the fourth level 320 of the first WB decoder 110 and/or the fourth level 420 of the second WB decoder 115. A skip connection 120b may connect the second level 210 of the encoder 105 to the third level 315 of the first WB decoder 110 and/or the third level 415 of the second WB decoder 115. A skip connection 120c may connect the third level 215 of the encoder 105 to the second level 310 of the first WB decoder 110 and/or the second level 410 of the second WB decoder 115.

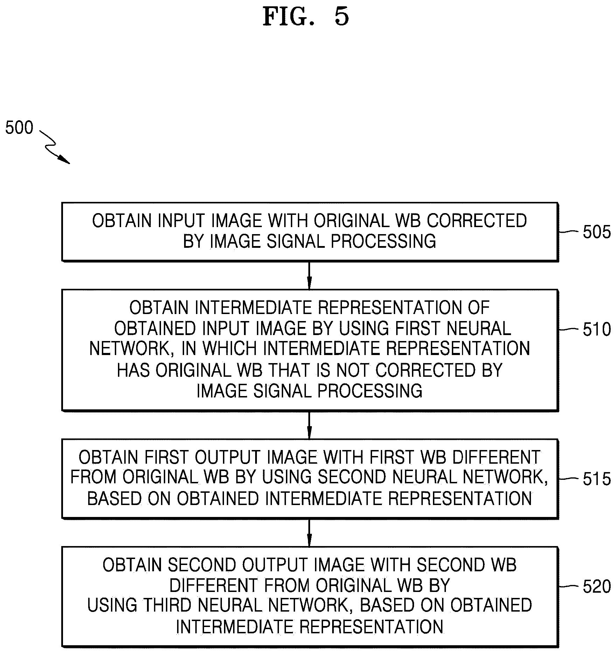

FIG. 5 is a flowchart of a deep white-balancing editing method 500 according to embodiments of the disclosure.

The method 500 may be performed by at least one processor using the apparatus 100 for deep white-balancing editing of FIG. 1.

Referring to FIG. 5, in operation 505, the method 500 includes obtaining an input image with original WB corrected by image signal processing.

In operation 510, the method 500 includes obtaining an intermediate representation of the obtained input image by using a first neural network, in which the intermediate representation has the original WB that is not corrected by image signal processing.

In operation 515, the method 500 includes obtaining a first output image with first WB different from the original WB by using a second neural network, based on the obtained intermediate representation.

In operation 520, the method 500 includes obtaining a second output image with second WB different from the original WB and the first WB by using a third neural network, based on the obtained intermediate representation.

The method 500 may further include displaying a slider for selecting one of a plurality of WBs, and displaying a resultant image with a WB selected from among the plurality of WBs by using the displayed slider and the obtained first output image, the obtained second output image, a blended image of the obtained first and second output images, or a combination thereof, based on a user input for selecting one of the plurality of WBs.

The at least one processor, the first neural network, and the second neural network may be implemented in a server, and the method 500 may further include receiving an input image for which an original WB is corrected from an ISP of an electronic device and transmitting the obtained first output image by image signal processing by the ISP.

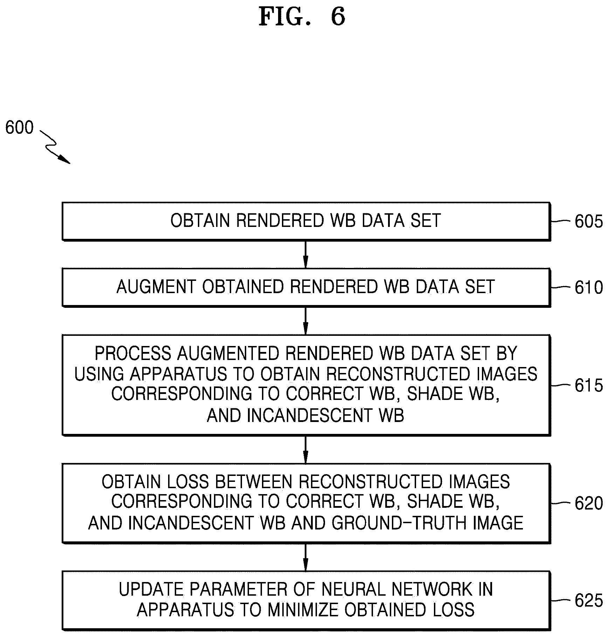

FIG. 6 is a flowchart of a training (or learning) method 600 for deep white-balancing editing, according to embodiments of the disclosure.

The method 600 may be performed by at least one processor that trains the apparatus 100 for deep white-balancing editing of FIG. 1.

Referring to FIG. 6, in operation 605, the method 600 includes obtaining a rendered WB data set. The rendered WB data set is used to train and verify the apparatus 100 for deep white-balancing editing. This data set may include about 65,000 sRGB images rendered with various types of camera models and various WB settings, including a shade setting and an incandescent setting. For each image, there is a corresponding ground-truth image rendered with a correct WB setting (i.e., considered as a correct AWB result). This data set includes two subsets, i.e., a training set (set 1) and a test set (set 2). Three-fold cross-validation using the set 1 is performed to train and verify the apparatus 100. In particular, 12,000 training images are randomly selected from among two folds, and 2,000 verification images are randomly selected from among remaining folds. For each training image, three ground-truth images are rendered together with (i) correct WB (represented by AWB), (ii) shade WB, and (iii) incandescent WB. Three exemplars are trained while changing training and verification folds.

In operation 610, the method 600 includes augmenting the obtained rendered WB data set. In detail, additional 1,029 raw-RGB images of the same scene included in the rendered WB data set are rendered but a training image is augmented using a certain color temperature. In each epoch, four 128x128 patches are randomly selected from among each training image and a corresponding ground-truth image for each decoder. Geometric augmentation (rotation and flipping) is applicable as additional data augmentation to the selected patches to avoid overfitting.

In operation 615, the method 600 may include processing the augmented rendered WB data set by using the apparatus 100 to obtain reconstructed images (patches) corresponding to the correct WB, the shade WB, and the incandescent WB.

In operation 620, the method 600 includes obtaining a loss between the reconstructed images corresponding to the correct WB, the shade WB, and the incandescent WB and the ground-truth image (patch). For example, the apparatus 100 is trained to minimize a squared L2-norm loss function between the reconstructed patches and the ground-truth patch.

[Equation 3]

$$\frac{1}{2} \sum_{i} \sum_{p=1}^{3hw} (P_{WB(i)}(p) - C_{WB(i)}(p))^2$$

h and w denote a width and height of a patch, respectively, and p denotes an index of each pixel of each trained patch P and ground-truth camera-rendered patch C. $i \in \{A, T, S\}$ denotes three target WB settings. Alternatively, an L1-norm loss function may be used to train the apparatus 100.

In operation 625, the method 600 includes updating a parameter of a neural network in the apparatus 100 (e.g., the encoder 105, the first WB decoder 110, and the second WB decoder 115) to minimize the obtained loss. For example, after a weight of a convolutional layer of the apparatus 100 is initialized, a training process may be repeatedly performed 165,000 times using an adaptive moment estimation optimizer with a gradient moving average attenuation rate $\beta_1=0.9$ and a squared gradient moving average attenuation rate $\beta_2=0.999$. A learning rate $10^{-4}$ may be used and reduced by 0.5 per 25 epochs. An L2 normalization ratio may be set, for example, to $10^{-5}$, and 32 training patches may be deployed as a mini batch size for iteration.

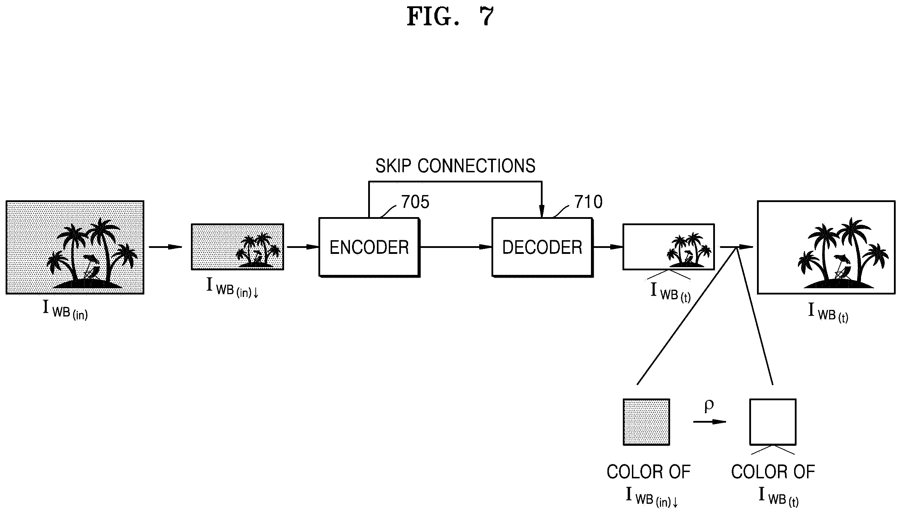

FIG. 7 is a diagram of a color mapping process in a deep white-balancing editing method according to embodiments of the disclosure.

A DNN model according to an embodiment of the disclosure is a fully-convolutional network, in which a 4-level encoder/decoder with a 2x2 max-pooling layer and an upsampling layer is used and thus is subject to a restriction that dimensions have to be multiples of $2^4$ and is capable of processing an input image to have original dimension.

However, the sizes of all of input images may be adjusted to a size of up to) 656 pixels to ensure a consistent execution time for input images with all sizes. The DNN model is applied to such an image with an adjusted size. Thereafter, a color mapping function between the input image with the adjusted size and an output image is calculated and applied to a full-size input image.

Referring to FIG. 7, a color mapping process is performed to produce $I_{WB(t)}$ from a resolution (i.e., $hXwX3$ pixels) of an original input image with respect to an input image $I_{WB(in)}$ ($h \times w$ pixels) and a corresponding output image $\hat{I}_{WB(t)}$($h' \times w'$ pixels, and in this case, $h' \leq h$ and $w' \leq w$) produced by an encoder 705 and one of decoders (i.e., a decoder 710). A polynomial function based on a mapping matrix P for globally mapping colors of a down-sampled input image $I_{WB(in)}\downarrow$ to colors of the produced output image $\hat{I}_{WB(i)}$ may be employed. For example, the mapping matrix P may be calculated by a closed-form solution, as follows:

[Equation 4]

$$\rho = (S^T S)^{-1} S^T Y$$

$S=h(r(I_{WB(in)\downarrow}))$, $Y=r(I_{WB(t)})$, $r:I^{(h \times w \times 3)} \rightarrow I^{(hw \times 3)}$ may be a reshape function of constructing $I^{(hw \times 3)}$ from $I^{(h \times w \times 3)}$, and $h:I^{(hw \times 3)} \rightarrow I^{(hw \times n)}$ may be a polynomial kernel function of mapping RGB vectors of an image to a higher n-dimensional space. For example, 11-dimensional polynomial mapping may be used.

When the mapping matrix $\rho$ is calculated, a final result of the same input image may be calculated by the following equation:

[Equation 5]

$$I_{WB(t)} = r^{-1}(\rho h(r(I_{WB(in)})))$$

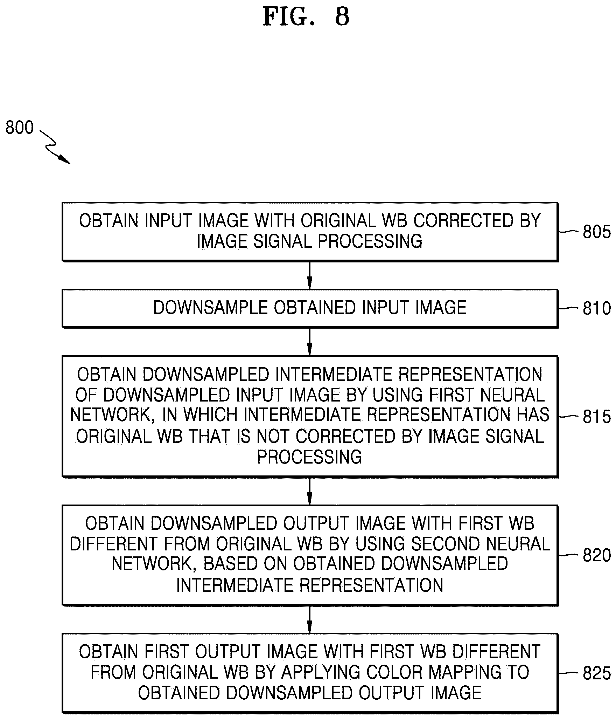

FIG. 8 is a flowchart of a deep white-balancing editing method 800 according to other embodiments of the disclosure.

The method 800 may be performed by at least one processor using the apparatus 100 for deep white-balancing editing of FIG. 1.

In operation 805, the method 800 includes obtaining an input image with original WB corrected by image signal processing.

In operation 810, the method 800 includes downsampling the obtained input image.

In operation 815, the method 800 includes obtaining a downsampled intermediate representation of the downsampled input image by using a first neural network, in which the intermediate representation has the original WB that is not corrected by image signal processing.

In operation 820, the method 800 includes obtaining a downsampled output image with first WB different from the original WB by using a second neural network, based on the obtained downsampled intermediate representation.

In operation 825, the method 800 includes obtaining a first output image with the first WB different from the original WB by applying color mapping to the obtained downsampled output image.

FIG. 9 is a diagram of a user interface 900 for deep white-balancing editing according to embodiments of the disclosure.

The user interface 900 displays an input image 905 and a slider 910, so that a user may select an image from among output images generated based on three available WB settings such as an AWB setting, a shade WB setting, and an incandescent WB setting. For example, a first output image 915 with incandescent WB (2850K) or a second output image 920 with shade WB (7500K) may be produced and displayed on the user interface 900 as shown in FIG. 9A or 9B. The slider 910 may be in a range 925 of Kelvins, e.g., 2850K to 7500K, and a user may select a Kelvin value within the range 925 by sliding the slider 910 to the selected value. Based on a user input for selecting the value, the user interface 900 may display an output image corresponding to the selected value.

Using the shade WB setting and the incandescent WB setting and the value selected from the range 925 by the user, the user may additionally edit the input image 905 to be a third output image 930 with a certain WB (e.g., 3500K) other than the shade WB or the incandescent lamp WB in terms of color temperature, as shown in FIG. 9C. To produce an effect of setting a new target WB corresponding to a color temperature t that is not produced by one of decoders (e.g., the first WB decoder 110), interpolation may be performed between the first and second output images 915 and 920 respectively produced using the incandescent and shade WB settings. The interpolation may be described by the following equation:

[Equation 6]

$$I_{WB(t)} = bI_{WB(T)} + (1-b)I_{WB(S)}$$

$I_{WB(T)}$ and $I_{WB(S)}$ may respectively denote the first and second output images 915 and 920 respectively produced with the incandescent and shade WB settings, and $b$ may denote an interpolation ratio given by

$$\frac{1/t - 1/t(S)}{1/t(T) - 1/t(S)}.$$

The user interface 900 may be implemented in an electronic device, e.g., a user application installed in a mobile device. The user application may be configured to edit a WB of an image captured by a camera of an electronic device and processed by an image signal processor of the electronic device. The user application may be part of a gallery editing service.

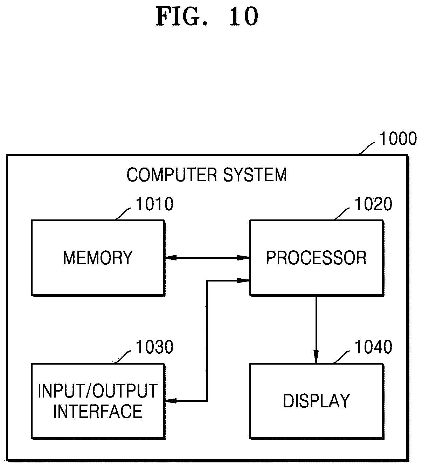

FIG. 10 is a block diagram of a computer system 1000 according to embodiments of the disclosure.

As shown in FIG. 10, the computer system 1000 may include a processor 1010, a memory 1020, an input/output interface 1030, and a display 1040.

The apparatus 1000 may be embodied as an electronic device (e.g., a mobile device) and/or a server.

The processor 1010 may perform overall control of the apparatus 100 for deep white balancing editing of FIG. 1, and execute one or more programs stored in the memory 1020. The processor 1010 is embodied as hardware, firmware, or a combination of hardware and software. The processor 1010 may be a central processing unit (CPU), a graphics processing unit (GPU), an acceleration processing unit (APU), a microprocessor, a microcontroller, a digital signal processor (DSP), a field-programmable gate array (FPGA), an application-specific integrated circuit (ASIC), or another type of processing component. In some embodiments of the disclosure, the processor 1010 includes one or more processors programmed to perform functions.

The processor 1010 according to embodiments of the disclosure may perform one or a combination of functions by using the encoder 105, the first WB decoder 110, and the second WB decoder 115 described above with reference to FIGS. 1 to 9.

The memory 1020 may include a hard disc (e.g., a magnetic disc, an optical disc, a magneto-optical disc and/or a solid-state disc), a compact disc (CD), a digital versatile disc (DVD), a floppy disk, a cartridge, a magnetic tape and/or other types of non-transitory computer-readable media, as well as a corresponding drive. Alternatively, the memory 1020 may include random access memory (RAM), read-only memory (ROM), and/or other types of dynamic or static storage devices (for example, a flash memory, a magnetic memory, and/or an optical memory).

The memory 1020 may store various types of data, a program, or an application for driving and controlling the apparatus 100. The program stored in the memory 1020 may include one or more instructions. The program, including one or more instructions or an application, stored in the memory 1020 may be executed by the processor 1010.

The input/output interface 1030 allows the computer system 1000 to communicate with other devices, such as other electronic devices and other servers, through a wired connection, a wireless connection, or a combination thereof. For example, when the apparatus 100 and the computer system 1000 are implemented in a server, the processor 1010 may receive an input image with an original WB corrected by image signal processing by an image signal processor of an electronic device from the image signal processor through the input/output interface 1030. The processor 1010 may transmit an output image with a WB different from the original WB to an electronic device through the input/output interface 1030.

The display 1040 may obtain data from, for example, the processor 1010, and display the obtained data. The display 1040 may include, for example, a touch screen, a television, a computer monitor, or a combination thereof.

Embodiments of the disclosure provide a deep learning framework for editing a WB. The framework exactly corrects a WB of an image with an incorrect WB. The framework also allows a user to freely edit a WB of a sRGB image with a different illumination setting.

The framework includes a single encoder and a multi-decoder. A multi-decoder model is trained to produce several WB settings by an end-to-end manner. The framework may achieve a most advanced result of WB correction and manipulation and produce a more efficient compilation result than those of previous tasks for WB correction and manipulation.

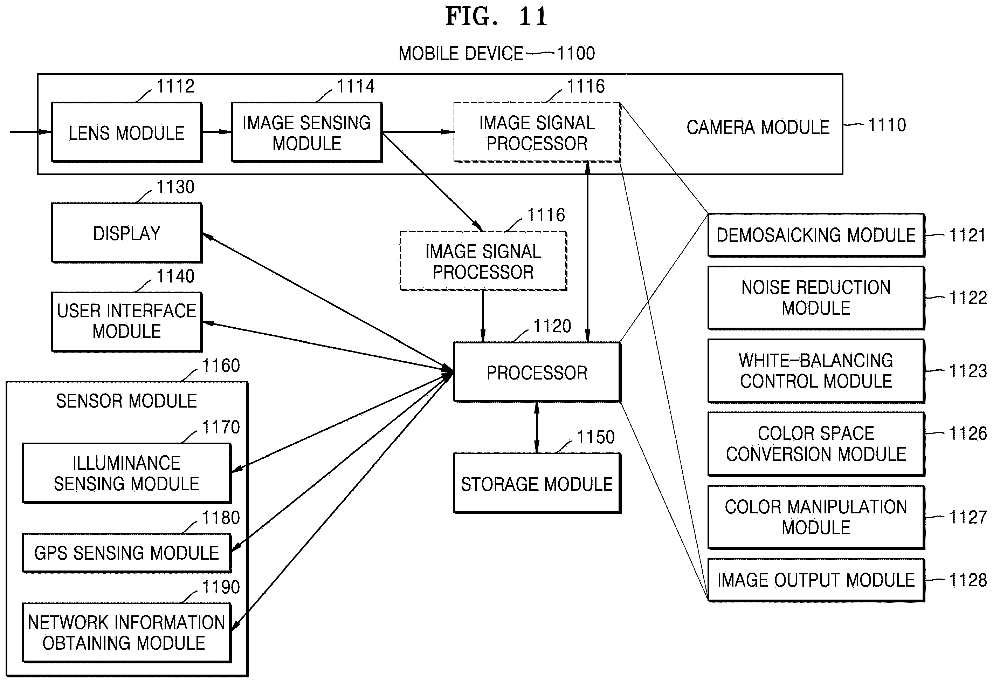

FIG. 11 is a block diagram of a mobile device 1100 according to an embodiment of the disclosure.

Referring to FIG. 11, the mobile device 1100 may include a camera module 1100 and a processor 1120. Embodiments of the disclosure are not limited thereto, and the mobile device 1100 may further include a display 1130, a user interface module 1140, an illuminance sensing module 1170, a GPS sensing module 1180, a network information obtaining module 1190, and a storage module 1150.

The camera module 1110 may include a lens module 1112, an image sensing module 1114, and an image signal processor 1116.

The lens module 1112 may include at least one lens to collect light reflected from a subject and transmit the light to the image sensing module 1114. According to an embodiment of the disclosure, the camera module 1110 may include a plurality of lens modules. In this case, the plurality of lens modules may have the same lens attribute (e.g., an angle of view, a focal length, auto focus, F number or optical zoom). Alternatively, at least one lens module may have at least one lens attribute different from lens attributes of the other lens module. For example, the lens module 1112 may include at least one lens of a wide-angle lens, a super-wide-angle lens, or a telephoto lens.

The image sensing module 1114 may include at least one image sensor to convert light collected by and transmitted from the lens module 1112 into an electrical signal. In addition, the image sensing module 1114 may obtain an image corresponding to a subject by using the electrical signal. The image obtained through the image sensing module 1114 will be described as raw image data herein. For example, at least one image sensor may be a charge-coupled device (CCD) sensor or a complementary metal-oxide semiconductor (CMOS) sensor and the image sensing module 1114 may include a color filter array configured with a Bayer pattern and a corresponding pixel array including at least one CCD sensor and a CMOS sensor. However, embodiments of the disclosure are not limited thereto, and the image sensing module 1114 may be embodied in various forms. For example, the image sensing module 1114 may be embodied as a Foveon sensor. Raw image data may be understood to mean image data obtained from the image sensing module 1114 without being image-processed by the image signal processor 1116, and may be, for example, color filter array data such as raw Bayer pattern data.

The image signal processor 1116 may image-process the raw image data and output data with a certain image format. The image format may be understood to mean an image format with a certain color space that an output device (e.g., a display device or a printer device) may represent to output an image or store the image before the image is output. For example, the image format may be an RGB-based format, a CMYK-based format, a YCbCR-based format, or the like. Examples of the RGB-based format include a sRGB format, an Adobe RGB format, a Prophoto RGB format, etc., and examples of the CMYK-based format include a SWOP CMYK format, etc.

For example, the image signal processor 1116 may process raw image data and output sRGB image data.

The image signal processor 1116 may be implemented by hardware. However, the image signal processor 1116 is not limited thereto and may be implemented by a combination of hardware and software. In this case, the image signal processor 1116 may be embodied as a software module in the processor 1120 outside the camera module 1110. Alternatively, the image signal processor 1116 may be embodied as hardware separated from the camera module 1110 and the processor 1120. The image signal processor 1116 may perform a function of processing raw image data in conjunction with the processor 1120 outside the camera module 1110. In another embodiment of the disclosure, the image signal processor 1116 may be embodied as a system-on-chip (SoC) in the camera module 1110.

The image signal processor 1116 or the processor 1120 may include a demosaicking module 1121, a noise reduction module 1122, a white-balancing control module 1123, a color space conversion module 1124, a color manipulation module 1125, and an image output module 1126.

The demosaicking module 1121 may perform demosaicking on raw image data. For example, the demosaicking module 1121 may perform RGB demosaicking on the raw image data to obtain RGB image data. Demosaicking may be a type of color interpolation.

The noise reduction module 1122 may perform a noise reduction process on RGB data to obtain RGB image data in which noise is reduced.

The white-balancing control module 1123 may receive first image data and output second image data with a controlled WB. The first image data may be original RGB image data and the second image data may be RGB data with the controlled WB. In this case, the first image data may be sRGB image data obtained while passing through at least one of the demosaicking module 1121 or the noise reduction module 1122.

Alternatively, the first image data may be original color filter array data, and the second image data may be color filter array data with a controlled WB.

According to an embodiment of the disclosure, the white-balancing control module 1123 may input first image data to at least one AI model among a plurality of AI models and obtain at least one piece of second image data with a controlled WB. In this case, the plurality of AI models may consist of a neural network and may each include an encoder model and a decoder model. The plurality of AI models may include different decoder models. The plurality of AI models may include the same encoder model.

For example, the white-balancing control module 1123 may include the encoder 105 (corresponding to an encoder model) and the first WB decoder 110 and the second WB decoder115 (corresponding to decoder models) of FIG. 1. However, it will be understood by those of ordinary skill in the art that the white-balancing control module 1123 is not limited to the first WB decoder 110 and the second WB decoder 115 and may further include a third WB decoder, a fourth WB decoder, etc. The first WB decoder and the second WB decoder may be selectively used by a processor or a video signal processor, and data processed by the encoder is processed input data.

The encoder and a plurality of WB decoders may be configured as a neural network and trained using an original sRGB image or a sRGB image with a changed WB as training data.

In addition, the encoder and the plurality of WB decoders may be trained using an original raw image and a raw image with a changed WB as training data.

Here, "original" is used as an expression corresponding to "changed WB", and is not limited to an image on which WB control is not performed by the image signal processor 1116 or the like with respect to original raw image data obtained by the image sensing module 1114 and may be understood to mean an image on which WB control is performed by the image signal processor 1116 with respect to the original raw image data.

In this case, the white-balancing control module 1123 may be regarded as an original WB control module when the image on which WB control is not performed by the image signal processor 1116 or the like with respect to the original raw image data obtained by the image sensing module 1114 is input as input data to the white-balancing control module 1123, and may be regarded as a post-WB control module when the image on which WB control is performed by the image signal processor 1116 or the like with respect to the original raw image data obtained by the image sensing module 1114 is input as input data to the white-balancing control module 1123. The above description of WBs with reference to the drawings before FIG. 11 relates to a post-WB control module but it will be understood by those of ordinary skill in the art that embodiments of the disclosure are not limited thereto and the above description may also apply to the original WB module.

"changed WB" may be understood to mean that a WB is changed to have a WB attribute (e.g., the AWB, the incandescent WB, or the shade WB) that is expected to be an output of a certain WB decoder.

The encoder may be configured as a first neural network, and receive sRGB image data as input data and output raw image data corresponding to the sRGB image data as output data.

In an embodiment of the disclosure, the encoding may receive raw image data as input data and output an intermediate representation corresponding to the raw image data as output data.

Each of the plurality of decoders may be configured as a second neural network having a structure different from that of the first neural network, and receive raw image data output from the encoder as input data. The encoder may receive, as input data, original raw image data obtained through the image sensing module 1114. In this case, an AI model composed of only decoders may be mounted in the mobile device 1100 to process original raw image data obtained through the image sensing module 1114. That is, during training of the AI model, the decoders and an encoder may be trained through one training process but when the trained AI model is applied to the mobile device 1100, only the decoders may be selected and stored in the storage module 1150 of the mobile device 1100.

In an embodiment of the disclosure, each of the decoders may receive an intermediate representation output from the encoder as input data. The decoders convert the input data to correspond to a predetermined WB attribute and output a result of converting the input data.

When the decoders receive raw image data as input data, each of the decoders converts the raw image data according to a WB attribute corresponding thereto to produce and output sRGB image data to which the WB attribute is reflected.

In an embodiment of the disclosure, in order to interface with a user, the mobile device may convert raw image data into sRGB image data, display the sRGB image data, and receive a user desired WB setting value through a displayed screen, but in order to reobtain an image to which the desired WB setting value is applied, the white-balancing control module 1123 may obtain raw image data corresponding to the displayed sRGB image through the encoder and obtain sRGB image data with a changed WB through a decoder corresponding to the user's desired WB setting.

In another embodiment of the disclosure, based on information about a shooting condition obtained through the sensor modules 1160, one of the plurality of AI models may be selected and an image to which a WB setting value corresponding to the shooting condition may be obtained by the selected AI model. In this case, the AI model may be an AI configured only with decoders and receive original raw image obtained through the image sensing module 1114 as input data.

When the decoders receive, as input data, an intermediate representation corresponding to input raw image data, the decoders generate raw image data converted according to a WB attribute corresponding to each of the decoders and output. That is, when a user interface is not needed, in order to obtain again an image to which a user's desired WB setting value is applied, the white-balancing control module 1123 may obtain an intermediate representation corresponding to raw image data through the encoder and obtain raw image data with a changed WB through a decoder corresponding to the user's desired WB setting.

A weight and a bias of the first neural network and at least one second neural network may be trained and set in advance. In an embodiment of the disclosure, the processor 1120 or the image signal processor 1116 may receive the weight and the bias of the first neural network and the at least one second neural network, which are trained in advance and stored, from a separate training device, and control the first neural network and the at least one second neural network stored in the storage module 1150 to be set with the received at least one weight and bias.

The white-balancing control module 1123 may determine an AI model corresponding to a shooting condition among the plurality of AI models stored in the storage model 1150, based on information about the shooting condition obtained through the sensor module 1160, and may input first image data to the determined AI model so as to obtain second image data with a WB controlled to correspond to the shooting condition. This will be described in detail after describing the sensor module 1160 below.

The color spatial conversion module 1124 may obtain image data with a converted color spatial by performing color space conversion on input image data. For example, the color space conversion module 1124 may perform CIE-XYZ image data by performing color spatial conversion on RGB image data.

The color manipulation module 1125 may obtain color-manipulated image data by performing color manipulation on image data with a converted color space. Color manipulation may include gamma correction and may be referred to as photo-finishing.

The image output module 1126 may output image data by performing mapping on the color-manipulated image data. For example, the output image data may be SRGB image data.

The sensor module 1160 may obtain information about a shooting condition. For example, the sensor module 1160 may include an illuminance sensing module 1170, a GPS sensing module 1180, and a network information obtaining module 1190.

The illuminance sensing module 1170 may obtain illuminance sensor information. The illuminance sensor information may represent a lux sensed by the illuminance sensor.

The GPS sensing module 1180 may obtain GPS sensor information. The GPS sensor information may represent at least one of a longitude, latitude, or altitude obtained by the GPS sensor. The GPS sensor information may be obtained and updated periodically or aperiodically in response to a request.

The network information obtaining module 1190 may obtain network status information. The network status information may include, but is not limited to, at least one of received signal strength indication (RSSI) information of at least one scanned access point (AP) or service set identifier (SSID) information of the scanned at least one at least one AP.

The white-balancing control module 1123 may determine an AI model corresponding to a shooting condition among a plurality of AI models, for WB control, stored in the storage model 1150, based on information about the shooting condition obtained through the sensor module 1160, and may input first image data to the determined AI model so as to obtain second image data with a WB controlled to correspond to the shooting condition.

For example, the white-balancing control module 1123 may identify whether the mobile device 1100 is located indoors or outdoors, based on at least one of GPS sensor information, illuminance sensor information, or network status information. The white-balancing control module 1123 may determine an AI model corresponding to a result of the identification result, based on the result of the identification. For example, there may be a tungsten/incandescent WB setting (or a fluorescent WB setting) representing indoor lighting, a shade WB setting representing outdoor lighting, and the like, and the white-balancing control module 1123 may identify whether the mobile device 1100 is located indoors or outdoors and determine an AI model corresponding to a WB setting related to a result of the identification among various types of WB settings, based on the result of the identification.

Referring to the drawings before FIG. 11, although it is described above that output image data with a certain WB is obtained using a WB decoder corresponding to a certain WB setting (e.g., the AWB setting, the incandescent WB setting or the shade WB setting), embodiments of the disclosure are not limited thereto, and it will be understood by those of ordinary skill in the art that in the embodiments of the drawings before FIG. 11, second image data with a WB controlled to correspond to the shooting condition may be obtained from first image data, based on information about a shooting condition (indoor/outdoor).

Generally, the AWB setting is an accurate WB setting, but an output image with a more appropriate WB setting may be obtained using a WB decoder corresponding to a WB setting determined based on the information about the shooting condition (indoor/outdoor). However, embodiments of the disclosure are not limited thereto, and an output image with the AWB setting and an output image with a WB setting corresponding to the shooting condition among an indoor WB setting and an outdoor WB setting may be simultaneously obtained and displayed on a display, so that a user may select one of the output images.

In an embodiment of the disclosure, the processor 1120 may determine a WB setting corresponding to information obtained using information about a shooting condition obtained through at least one sensor module 1160. The processor 1120 may determine an AI model

corresponding to the determined WB setting among the plurality of AI models stored in the storage module 1150. The processor 1120 may control the image signal processor 1116 to process CFA image data obtained from the image sensing module 1114 by loading the determined AI model to the image signal processor 1116. More specifically, the processor 1120 may control data about the AI model determined among the plurality of AI models stored in the storage module 1150 to be loaded to a memory (not shown) in the processor 1116. The image signal processor 1116 may process the CFA image data received from the image sensing module 1114 by using the data about the AI model loaded to the memory. The image signal processor 1116 may obtain RGB image data by processing the CFA image data by the AI model.

In an embodiment of the disclosure, a storage module (not shown) in the image signal processor 1116 may store a plurality of AI models. Here, the storage module differs from the memory in the image signal processor 1116. That is, the storage module may be a flash memory or DRAM, and the memory may be SRAM. In this case, the image signal processor 1116 receives data about a WB setting corresponding to information, which is obtained from the processor 1120 through at least one sensor module 1160, by using the information. The image signal processor 1116 may determine an AI model to be processed by using the received data about the WB setting. The image signal processor 1116 may control the determined AI model to be loaded to a memory (not shown) in the image signal processor 1116. The image signal processor 1116 may process CFA image data received from the image sensing module 1114 by using data about the AI model loaded to the memory. The image signal processor 1116 may obtain RGB image data by processing the CFA image data by the AI model.

The white-balancing control module 1123 may identify that a mobile device is located indoors when GPS sensor information is not updated, and identify that the mobile device is located outdoors when GPS sensor information is updated.

The white-balancing control module 1123 may identify that the mobile device is located outdoors when a sensor value (e.g., a lux value) of illuminance sensor information is greater than or equal to a first value. In this case, the white-balancing control module 1123 may identify whether the sun rises, based on current time information, and an estimated value according to the position of the sun corresponding to the current time may be set to the first value. Because there is only an artificial illumination at the time when the sun is not expected to rise, the mobile device may identify as being located indoors regardless of the sensor value of the illuminance sensor information.

The white-balancing control module 1123 may identify that the mobile device is located indoors when the sensor value (e.g., a lux value) of the illuminance sensor information is less than or equal to a second value.

The white-balancing control module 1123 may identify that the mobile device is located indoors when an average RSSI of scanned APs is greater than or equal to a first value, and identify that the mobile device is located outdoors when the average RSSI of the scanned APs is less than a second value.

Otherwise, the white-balancing control module 1123 may identify that the module is located outdoors, when among the scanned APs, the number of APs, the RSSI of which is less than or equal to the second value, is greater than or equal to a second number or the number of APs, which is greater than or equal to the first value, is less than a first number.

The white-balancing control module 1123 may identify that the module is located indoors when among the scanned APs, the number of APs, the RSSI of which is greater than or equal to the first value, is greater than or equal to the first number.

The white-balancing control module 1123 may identify that the module is located outdoors, when among the scanned APs, the number of APs, the RSSI of which is less an or equal to the second value, is greater than or equal to a second number or the number of APs, which is greater than or equal to the first value, is less than the first number.

Only APs with an SSID, the part of which corresponds to a character string, may be considered when the condition described above is satisfied. However, embodiments of the disclosure are not limited thereto, and whether a final condition is satisfied may be determined by differentiating between a group of corresponding APs and other groups of APs and assigning different weights to results of determining whether the groups each satisfy an intermediate condition.

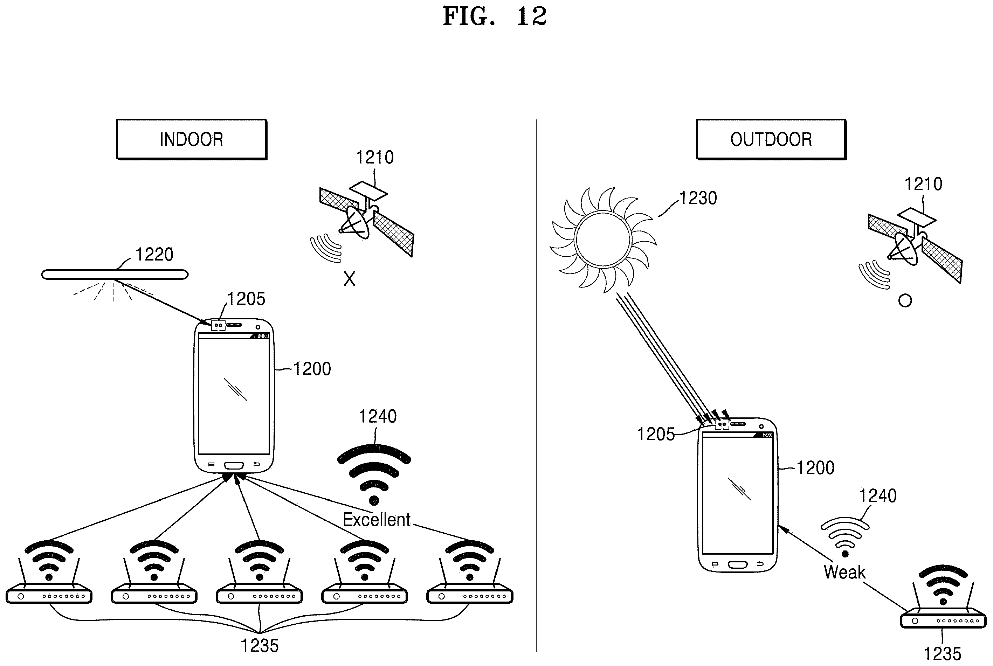

An embodiment in which the white-balancing control module 1123 identifies whether the mobile device 1100 is located indoors or outdoors, based on at least one of GPS sensor information, illuminance sensor information, or network status information, will be described in detail with reference to FIG. 12 below.

The display 1130 may display various types of image data. In particular, the processor 1120 controls the display 1130 to display data with a certain image format output through the image signal processor 1116 or the like.

The user interface module 1140 may receive various types of user inputs. The display 1130 and the user interface module 1140 may be embodied together as a touch screen that includes a touch sensor and a display panel (e.g., an LCD or an AMOLED). The processor 1120 may control the camera module 1110 to be driven, based on a user input received through the user interface module 1140. That is, the processor 1120 may control the display panel to display a user interface (UI) icon for starting to capture an image and an UI icon for setting an image capture condition. When a user input that is input through the touch sensor is received, the processor 1120 may control the image sensing module 1115 to convert light collected through the lens module 1112 in the camera module 1110 into an electrical signal.

The storage module 1150 may display various types of image data. In particular, the processor 1120 controls the storage module 1150 to store data with a certain image format output through the image signal processor 1116 or the like. The image format stored in the storage module 1150 may be different from an image format output to the display 1130. For example, the processor 1120 may perform loss/lossless compression on at least one output image obtained from the white-balancing control module 1123 according to a certain compression standard (e.g., the JPEG standard), and control the storage module 1150 to store the compressed output image.

The storage module 1150 may also store information about an AI model used in the white-balancing module 1123.

FIG. 12 is a diagram for describing identifying whether the mobile device is located indoors or outdoors, based on various types of information obtained by a mobile device, and performing WB control, based on a result of the identification.

Referring to FIG. 12, a mobile device 1200 may obtain illuminance sensor information by sensing light from an indoor lamp 120 (e.g., fluorescent light or incandescent light) by using an illuminance sensor 1205. The mobile device 1200 may identify that the mobile device 1200 is located indoors when a value of the illuminance sensor information is less than or equal to a first value. This is because in general, an illumination value indoors is considerably less than an illumination value outdoors.

The mobile device 1200 may obtain GPS sensor information from a GPS satellite 1210 using a GPS sensor. When the GPS sensor information is not updated, the mobile device 1200 may identify that the mobile device 1200 is located indoors. This is because generally, it is difficult to receive GPS sensor information when the mobile device 1200 is located indoors.

The mobile device 1200 may scan APs 1235 therearound to obtain a list of at least one scanned AP. The mobile device 1200 may identify the number of scanned APs 1235, based on the number of SSIDs of the scanned APs 1235, and identify signal strength of each of the scanned APs 1235, based on RSSIs 1240 of the scanned APs 1235.

The mobile device 1200 may identify that the mobile device 1200 is located indoors when an average value of the RSSIs 1240 of the scanned APs 1235 is greater than or equal to the first value. This is because generally, when the mobile device 1200 is located indoors, the APs 1235 are located close to the mobile device 1200 and thus the average value of the RSSIs 1240 of the APs 1235 is small.

Alternatively, the mobile device 1200 may identify that the mobile device 1200 is located indoors when the number of APs 1235, the RSSI 1240 of which is greater than or equal to the first value, is greater than or equal to a first number. Generally, this is because when the mobile device 1200 is located indoors, many APs are located close to the mobile device 1200 and thus the number of APs, the RSSI 1240 of which is large indoors, is greater than the number of APs, the RSSI 1240 of which is large outdoors.

The mobile device 1200 may obtain the illuminance sensor information by sensing light from the sun 1230 by using the illuminance sensor 1205. The mobile device 1200 may identify that the mobile device 1200 is located indoors when a value of the illuminance sensor information is greater than or equal to a second value. This is because in general, an illumination value outdoors is considerably greater than an illumination value indoors.

The mobile device 1200 may obtain GPS sensor information from the GPS satellite 1210 by using a GPS sensor. When the GPS sensor information is updated, the mobile device 1200 may identify that the mobile device 1200 is located outdoors. This is because generally, the GPS sensor information is more easily received when the mobile device 1200 is located outdoors than when the mobile device 1200 is located indoors and thus may be updated in response to a request in most cases.

The mobile device 1200 may scan the APs 1235 around the mobile device 1200. The mobile device 1200 may identify the number of scanned APs 1235, based on the number of SSIDs of the scanned APs 1235, and identify signal strength of each of the scanned APs 1235, based on RSSIs 1240 of the scanned APs 1235.

The mobile device 1200 may identify that the mobile device 1200 is located outdoors when an average value of the RSSIs 1240 of the scanned APs 1235 is less than a second value. This is because generally, when the mobile device 1200 is located outdoors, the average RSSI of the APs 1235 is small due to a large distance to the mobile device 1200 from the APs 1235 or due to various types of obstacles.

Alternatively, the mobile device 1200 may identify that the mobile device 1200 is located outdoors when the number of APs 1235, the RSSI 1240 of which is less than or equal to the second value, is greater than or equal to a second number. This is because generally, when the mobile device 1200 is located outdoors, the number of APs 1235 with a small RSSI outdoors is less than the number of APs 1235 with a small RSSI indoors due to a large distance to the mobile device 1200 from the APs 1235 or due to various types of obstacles.

However, embodiments of the disclosure are not limited thereto, and the mobile device 1200 may identify that the mobile device 1200 is located outdoors when the number of APs 1235, the RSSI 1240 of which is greater than or equal to the first value, is less than the first number. This is because generally, when the mobile device 1200 is located outdoors, the number of APs 1235 close to the mobile device 1200 outdoors is less than the number of APs 1235 close to the mobile device 1200 indoors.

However, embodiments of the disclosure are not limited thereto, and the mobile device 1200 may identify whether the mobile device 1200 is located indoors or outdoors by various techniques, based on at least one of the illumination sensor information, the GPS sensor information or the network status information.

The mobile device 1200 may perform white balancing control, based on an identification result. For example, there may be the tungsten/incandescent WB setting (or a fluorescent WB setting) representing indoor lighting, the shade WB setting representing outdoor lighting, and the like, and the mobile device 1200 may identify whether the mobile device 1200 is located indoors or outdoors, determine an AI model related to a WB setting among a plurality of AI models related to a plurality of WB settings, based on a result of the identification, and obtain an output image by using the determined AI model.

While embodiments of the disclosure have been described above with reference to the drawings, it will be understood by those of ordinary skill in the art that various changes may be made in forms and details without departing from the scope of the following claims.

**Claims**

1. Apparatus (100) for white balance editing, the apparatus comprising:

   a memory (1010) storing instructions; and
   at least one processor (1020) configured to execute the instructions to:

   obtain an input image (905) having a corrected white balance that is obtained by correcting an original white balance via image signal processing;
   obtain, using a first neural network (105), an intermediate representation of the obtained input image, wherein the intermediate representation has the original white balance; and
   obtain, using a second neural network (110), a first output image (915) having a first white balance different than the original white balance, based on the obtained intermediate representation, and
   obtain, using a third neural network (115), a second output image (920) having a second white balance different than the original white balance and the first white balance, based on the obtained intermediate representation, and
   wherein the first neural network is an encoder part of a U-net architecture, and
   wherein the second and third neural networks are identically structured decoder parts of the U-net architecture, and

   wherein a multi-scale skip connection (120) connects layers of the first neural network with layers of the second and third neural networks

2. The apparatus of claim 1, wherein the at least one processor is further configured to execute the instructions to:

   control to display a slider (910) for selecting one among a plurality of white balances; and
   based on a user input of selecting the one among the plurality of white balances, using the displayed slider, control to display a result image having the selected one among the plurality of white balances, using any one or any combination of the obtained first output image, the obtained second output image and a blended image of the obtained first output image and the obtained second output image.

3. The apparatus of claim 1, wherein the apparatus, the first neural network and the second neural network are implemented in a server, and
   the at least one processor is further configured to execute the instructions to:

   receive, from an image signal processor (116) of an electronic device (1100), the input image having the original white balance; and
   transmit, to the electronic device, the obtained first output image.

4. A method of white balance editing (500), the method being performed by at least one processor (1020) and comprising:

   obtaining an input image (905) having a corrected white balance that is obtained by correcting an original white balance via image signal processing;
   obtaining, using a first neural network (105), an intermediate representation of the obtained input image, wherein the intermediate representation has the original white balance; and
   obtaining, using a second neural network (110), a first output image (915) having a first white balance different than the original white balance, based on the obtained intermediate representation, and
   obtaining, using a third neural network (115), a second output image (920) having a second white balance different than the original white balance and the first white balance, based on the obtained intermediate representation, and
   wherein the first neural network is an encoder part of a U-net architecture, and
   wherein the second and third neural networks are identically structured decoder parts of the U-net architecture, and

wherein a multi-scale skip connection (120) connects layers of the first neural network with layers of the second and third neural networks

**5.** The method of claim 4, further comprising:

displaying a slider (910) for selecting one among a plurality of white balances; and

based on a user input of selecting the one among the plurality of white balances, using the displayed slider, displaying a result image having the selected one among the plurality of white balances, using any one or any combination of the obtained first output image (915), the obtained second output image (920) and a blended image of the obtained first output image (915) and the obtained second output image (920).

**6.** The method of claim 4, wherein the at least one processor, the first neural network and the second neural network are implemented in a server, and the method further comprises:

receiving, from an image signal processor (1116) of an electronic device (1100), the input image having the original white balance; and

transmitting, to the electronic device, the obtained first output image.

**7.** A non-transitory computer-readable storage medium (1020) storing instructions that, when executed by at least one processor (1020) for white balance editing, cause the at least one processor to:

obtain an input image (905) having a corrected white balance that is obtained by correcting an original white balance via image signal processing;

obtain, using a first neural network (105), an intermediate representation of the obtained input image, wherein the intermediate representation has the original white balance; and

obtain, using a second neural network (110), a first output image (915) having a first white balance different than the original white balance, based on the obtained intermediate representation, and

obtain, using a third neural network (115), a second output image (920) having a second white balance different than the original white balance and the first white balance, based on the obtained intermediate representation, and

wherein the first neural network is an encoder part of a U-net architecture, and

wherein the second and third neural networks are identically structured decoder parts of the U-net architecture, and

wherein a multi-scale skip connection (120) connects layers of the first neural network with layers of the second and third neural networks.

**Patentansprüche**

**1.** Vorrichtung (100) zur Bearbeitung des Weißabgleichs, wobei die Vorrichtung Folgendes umfasst:

einen Speicher (1010), der Anweisungen speichert; und

mindestens einen Prozessor (1020), der dazu konfiguriert ist, die Anweisungen so auszuführen, dass:

ein Eingangsbild (905) mit einem korrigierten Weißabgleich erhalten wird, der durch Korrigieren eines ursprünglichen Weißabgleichs durch Bildsignalverarbeitung erhalten wird;

unter Verwendung eines ersten neuronalen Netzwerks (105) eine Zwischendarstellung des erhaltenen Eingangsbildes erhalten wird, wobei die Zwischendarstellung den ursprünglichen Weißabgleich aufweist; und

unter Verwendung eines zweiten neuronalen Netzwerkes (110) ein erstes Ausgabebild (915) mit einem ersten Weißabgleich, der sich von dem ursprünglichen Weißabgleich unterscheidet, basierend auf der erhaltenen Zwischendarstellung erhalten wird, und

unter Verwendung eines dritten neuronalen Netzwerkes (115) ein zweites Ausgabebild (920) mit einem zweiten Weißabgleich, der sich von dem ursprünglichen Weißabgleich und dem ersten Weißabgleich unterscheidet, basierend auf der erhaltenen Zwischendarstellung erhalten wird, und

wobei das erste neuronale Netzwerk ein Codiererteil einer U-Net-Architektur ist, und

wobei das zweite und das dritte neuronale Netzwerk identisch strukturierte Decoderteile der U-Net-Architektur sind, und

wobei eine mehrskalige Skip-Verbindung (120) Schichten des ersten neuronalen Netzwerkes mit Schichten des zweiten und dritten neuronalen Netzwerkes verbindet.

**2.** Vorrichtung nach Anspruch 1, wobei der mindestens eine Prozessor ferner dazu konfiguriert ist, die Anweisungen so auszuführen, dass:

so gesteuert wird, dass ein Schieberegler (910) zum Auswählen eines aus einer Vielzahl von Weißabgleichen angezeigt wird; und

basierend auf einer Benutzereingabe des Auswählens des einen aus der Vielzahl von Weißabgleichen unter Verwendung des angezeigten Schiebereglers, so gesteuert wird, dass ein Ergebnisbild mit dem ausgewählten aus der Vielzahl von Weißabgleichen unter Verwendung einer beliebigen oder jeglicher Kombination aus dem erhaltenen ersten Ausgabebild, dem erhaltenen zweiten Ausgabebild und einem gemischten Bild des erhaltenen ersten Ausgabebildes und des erhaltenen zweiten Ausgabebildes angezeigt wird.

3. Vorrichtung nach Anspruch 1, wobei die Vorrichtung, das erste neuronale Netzwerk und das zweite neuronale Netzwerk in einem Server implementiert sind und

der mindestens eine Prozessor ferner dazu konfiguriert ist, die Anweisungen so auszuführen, dass:

von einem Bildsignalprozessor (116) eines elektronischen Geräts (1100) das Eingangsbild mit dem ursprünglichen Weißabgleich empfangen wird; und

das erhaltene erste Ausgabebild an das elektronische Gerät übertragen wird.

4. Verfahren zur Bearbeitung (500) eines Weißabgleichs, wobei das Verfahren durch mindestens einen Prozessor (1020) durchgeführt wird und Folgendes umfasst:

Erhalten eines Eingangsbildes (905) mit einem korrigierten Weißabgleich, der durch Korrigieren eines ursprünglichen Weißabgleichs durch Bildsignalverarbeitung erhalten wird;

Erhalten, unter Verwendung eines ersten neuronalen Netzwerks (105), einer Zwischendarstellung des erhaltenen Eingangsbildes, wobei die Zwischendarstellung den ursprünglichen Weißabgleich aufweist; und

Erhalten, unter Verwendung eines zweiten neuronalen Netzwerkes (110), eines ersten Ausgabebildes (915) mit einem ersten Weißabgleich, der sich von dem ursprünglichen Weißabgleich unterscheidet, basierend auf der erhaltenen Zwischendarstellung, und

Erhalten, unter Verwendung eines dritten neuronalen Netzwerkes (115), eines zweiten Ausgabebildes (920) mit einem zweiten Weißabgleich, der sich von dem ursprünglichen Weißabgleich und dem ersten Weißabgleich unterscheidet, basierend auf der erhaltenen Zwischendarstellung, und

wobei das erste neuronale Netzwerk ein Codiererteil einer U-Net-Architektur ist, und

wobei das zweite und das dritte neuronale Netzwerk identisch strukturierte Decoderteile der U-Net-Architektur sind, und

wobei eine mehrskalige Skip-Verbindung (120) Schichten des ersten neuronalen Netzwerkes mit Schichten des zweiten und dritten neuronalen Netzwerkes verbindet.

5. Verfahren nach Anspruch 4, ferner umfassend:

Anzeigen eines Schiebereglers (910) zum Auswählen eines aus einer Vielzahl von Weißabgleichen; und

basierend auf einer Benutzereingabe des Auswählens des einen aus der Vielzahl von Weißabgleichen unter Verwendung des angezeigten Schiebereglers, Anzeigen eines Ergebnisbildes mit dem ausgewählten aus der Vielzahl von Weißabgleichen unter Verwendung einer beliebigen oder jeglicher Kombination aus dem erhaltenen ersten Ausgabebild (915), dem erhaltenen zweiten Ausgabebild (920) und einem gemischten Bild des erhaltenen ersten Ausgabebildes (915) und des erhaltenen zweiten Ausgabebildes (920).

6. Verfahren nach Anspruch 4, wobei der mindestens eine Prozessor, das erste neuronale Netzwerk und das zweite neuronale Netzwerk in einem Server implementiert sind und das Verfahren ferner Folgendes umfasst:

Empfangen, von einem Bildsignalprozessor (1116) eines elektronischen Geräts (1100), des Eingangsbildes mit dem ursprünglichen Weißabgleich; und

Übertragen des erhaltenen ersten Ausgabebildes an das elektronische Gerät.

7. Nichtflüchtiges computerlesbares Speichermedium (1020), das Anweisungen speichert, die, wenn sie von mindestens einem Prozessor (1020) zur Bearbeitung des Weißabgleichs ausgeführt werden, bewirken, dass der mindestens eine Prozessor:

ein Eingangsbild (905) mit einem korrigierten Weißabgleich erhält, der durch Korrigieren eines ursprünglichen Weißabgleichs durch Bildsignalverarbeitung erhalten wird;

unter Verwendung eines ersten neuronalen Netzwerks (105) eine Zwischendarstellung des erhaltenen Eingangsbildes erhält, wobei die Zwischendarstellung den ursprünglichen Weißabgleich aufweist; und

unter Verwendung eines zweiten neuronalen Netzwerkes (110) ein erstes Ausgabebild (915) mit einem ersten Weißabgleich, der sich von dem ursprünglichen Weißabgleich unterscheidet, basierend auf der erhaltenen Zwischendarstellung erhält, und

unter Verwendung eines dritten neuronalen Netzwerkes (115) ein zweites Ausgabebild (920) mit einem zweiten Weißabgleich, der sich von dem ursprünglichen Weißabgleich und dem ersten Weißabgleich unterscheidet, basierend auf der erhaltenen Zwischendarstellung erhält, und

wobei das erste neuronale Netzwerk ein Codiererteil einer U-Net-Architektur ist, und

wobei das zweite und das dritte neuronale Netzwerk identisch strukturierte Decoderteile der U-Net-Architektur sind, und

wobei eine mehrskalige Skip-Verbindung (120) Schichten des ersten neuronalen Netzwerkes mit Schichten des zweiten und dritten neuronalen Netzwerkes verbindet.

## Revendications

1. Appareil (100) de modification d'équilibrage des blancs, l'appareil comprenant :

une mémoire (1010) stockant des instructions ; et

au moins un processeur (1020) configuré pour exécuter les instructions pour :

obtenir une image d'entrée (905) présentant un équilibrage des blancs corrigé qui est obtenu en corrigeant un équilibrage des blancs d'origine par l'intermédiaire d'un traitement de signal d'image ;

obtenir, à l'aide d'un premier réseau neuronal (105), une représentation intermédiaire de l'image d'entrée obtenue, dans lequel la représentation intermédiaire présente l'équilibrage des blancs d'origine ; et

obtenir, à l'aide d'un deuxième réseau neuronal (110), une première image de sortie (915) présentant un premier équilibrage des blancs différent de l'équilibrage des blancs d'origine, sur la base de la représentation intermédiaire obtenue, et

obtenir, à l'aide d'un troisième réseau neuronal (115), une seconde image de sortie (920) présentant un second équilibrage des blancs différent de l'équilibrage des blancs d'origine et du premier équilibrage des blancs, sur la base de la représentation intermédiaire obtenue, et

dans lequel le premier réseau neuronal est une partie de codeur d'une architecture U-Net, et

dans lequel les deuxième et troisième réseaux neuronaux sont des parties de décodeur de structure identique de l'architecture U-Net, et

dans lequel une connexion de saut multi-échelle (120) connecte les couches du premier réseau neuronal aux couches des deuxième et troisième réseaux neuronaux.

2. Appareil de la revendication 1, dans lequel l'au moins un processeur est en outre configuré pour exécuter les instructions pour :

commander d'afficher un curseur (910) pour sélectionner l'un parmi une pluralité d'équilibrages des blancs ; et

sur la base d'une entrée utilisateur de sélection de l'un parmi la pluralité d'équilibrages des blancs, à l'aide du curseur affiché, commander d'afficher une image de résultat présentant l'un sélectionné parmi la pluralité d'équilibrage des blancs, à l'aide de l'une quelconque ou d'une combinaison quelconque de la première image de sortie obtenue, de la seconde image de sortie obtenue et d'une image mélangée de la première image de sortie obtenue et de la seconde image de sortie obtenue.

3. Appareil de la revendication 1, dans lequel l'appareil, le premier réseau neuronal et le deuxième réseau neuronal sont mis en œuvre dans un serveur, et l'au moins un processeur est en outre configuré pour exécuter les instructions pour :

recevoir, en provenance d'un processeur de signal d'image (116) d'un dispositif électronique (1100), l'image d'entrée présentant l'équilibrage des blancs d'origine ; et

transmettre, au dispositif électronique, la première image de sortie obtenue.

4. Procédé de modification d'équilibrage des blancs (500), le procédé étant réalisé par au moins un processeur (1020) et comprenant :

l'obtention d'une image d'entrée (905) présentant un équilibrage des blancs corrigé qui est obtenu en corrigeant un équilibrage des blancs d'origine par l'intermédiaire d'un traitement de signal d'image ;

l'obtention, à l'aide d'un premier réseau neuronal (105), d'une représentation intermédiaire de l'image d'entrée obtenue, dans lequel la représentation intermédiaire présente l'équilibrage des blancs d'origine ; et

l'obtention, à l'aide d'un deuxième réseau neuronal (110), d'une première image de sortie (915) présentant un premier équilibrage des blancs différent de l'équilibrage des blancs d'origine, sur la base de la représentation intermédiaire obtenue, et

l'obtention, à l'aide d'un troisième réseau neuronal (115), d'une seconde image de sortie (920) présentant un second équilibrage des blancs différent de l'équilibrage des blancs d'origine et du premier équilibrage des blancs, sur la base de la représentation intermédiaire obtenue, et dans lequel le premier réseau neuronal est une partie de codeur d'une architecture U-Net, et dans lequel les deuxième et troisième réseaux neuronaux sont des parties de décodeur de structure identique de l'architecture U-Net, et dans lequel une connexion de saut multi-échelle (120) connecte les couches du premier réseau neuronal aux couches des deuxième et troisième réseaux neuronaux.

5. Procédé de la revendication 4, comprenant en outre :

l'affichage d'un curseur (910) pour sélectionner l'un parmi une pluralité d'équilibrages des blancs ; et
sur la base d'une entrée utilisateur de sélection de l'un parmi la pluralité d'équilibrages des blancs, à l'aide du curseur affiché, l'affichage d'une image de résultat présentant l'un sélectionné parmi la pluralité d'équilibrage des blancs, à l'aide de l'une quelconque ou d'une combinaison quelconque de la première image de sortie (915) obtenue, de la seconde image de sortie (920) obtenue et d'une image mélangée de la première image de sortie (915) obtenue et de la seconde image de sortie (920) obtenue.

6. Procédé de la revendication 4, dans lequel l'au moins un processeur, le premier réseau neuronal et le deuxième réseau neuronal sont mis en œuvre dans un serveur, et
le procédé comprend en outre :

la réception, en provenance d'un processeur de signal d'image (1116) d'un dispositif électronique (1100), de l'image d'entrée présentant l'équilibrage des blancs d'origine ; et
la transmission, au dispositif électronique, de la première image de sortie obtenue.

7. Support de stockage non transitoire lisible par ordinateur (1020) stockant des instructions qui, lorsqu'elles sont exécutées par au moins un processeur (1020) pour la modification d'équilibrage des blancs, amènent l'au moins un processeur à :

obtenir une image d'entrée (905) présentant un équilibrage des blancs corrigé qui est obtenu en corrigeant un équilibrage des blancs d'origine par l'intermédiaire d'un traitement de signal d'image ;

obtenir, à l'aide d'un premier réseau neuronal (105), une représentation intermédiaire de l'image d'entrée obtenue, dans lequel la représentation intermédiaire présente l'équilibrage des blancs d'origine ; et

obtenir, à l'aide d'un deuxième réseau neuronal (110), une première image de sortie (915) présentant un premier équilibrage des blancs différent de l'équilibrage des blancs d'origine, sur la base de la représentation intermédiaire obtenue, et

obtenir, à l'aide d'un troisième réseau neuronal (115), une seconde image de sortie (920) présentant un second équilibrage des blancs différent de l'équilibrage des blancs d'origine et du premier équilibrage des blancs, sur la base de la représentation intermédiaire obtenue, et

dans lequel le premier réseau neuronal est une partie de codeur d'une architecture U-Net, et dans lequel les deuxième et troisième réseaux neuronaux sont des parties de décodeur de structure identique de l'architecture U-Net, et dans lequel une connexion de saut multi-échelle (120) connecte les couches du premier réseau neuronal aux couches des deuxième et troisième réseaux neuronaux.

# FIG. 1

INPUT IMAGE → ENCODER 105 → INTERMEDIATE REPRESENTATION → FIRST WB DECODER 110 → FIRST OUTPUT IMAGE

→ SECOND WB DECODER 115 → SECOND OUTPUT IMAGE

SKIP CONNECTIONS 120

SKIP CONNECTIONS 120

100

EP 4 207 755 B1

# FIG. 2

SKIP CONNECTION —120a
SKIP CONNECTION —120b
SKIP CONNECTION —120c

205
210
ENCODER —105
215

INPUT IMAGE

INTERMEDIATE REPRESENTATION

215a  215b  215e
215c  215d

205a  205b  210a  210c  210d  210b
205c  205d  210e  210f

EP 4 207 755 B1

**FIG. 3**

120a

120b

120c

SKIP CONNECTION

SKIP CONNECTION

SKIP CONNECTION

FIRST WB DECODER

110

310

315

320

305

305a

305c

305b

305d

310a

310b

310e

310f

310c

310g

310d

315b

315a

315e

315f

315c

315g

315d

320a

320b

320e

320f

320c

320d

320g

INTERMEDIATE REPRESENTATION

OUTPUT IMAGE

EP 4 207 755 B1

# FIG. 4

EP 4 207 755 B1

# FIG. 5

500

| OBTAIN INPUT IMAGE WITH ORIGINAL WB CORRECTED BY IMAGE SIGNAL PROCESSING | 505 |

| OBTAIN INTERMEDIATE REPRESENTATION OF OBTAINED INPUT IMAGE BY USING FIRST NEURAL NETWORK, IN WHICH INTERMEDIATE REPRESENTATION HAS ORIGINAL WB THAT IS NOT CORRECTED BY IMAGE SIGNAL PROCESSING | 510 |

| OBTAIN FIRST OUTPUT IMAGE WITH FIRST WB DIFFERENT FROM ORIGINAL WB BY USING SECOND NEURAL NETWORK, BASED ON OBTAINED INTERMEDIATE REPRESENTATION | 515 |

| OBTAIN SECOND OUTPUT IMAGE WITH SECOND WB DIFFERENT FROM ORIGINAL WB BY USING THIRD NEURAL NETWORK, BASED ON OBTAINED INTERMEDIATE REPRESENTATION | 520 |

# FIG. 6

600

| OBTAIN RENDERED WB DATA SET | 605 |

↓

| AUGMENT OBTAINED RENDERED WB DATA SET | 610 |

↓

| PROCESS AUGMENTED RENDERED WB DATA SET BY USING APPARATUS TO OBTAIN RECONSTRUCTED IMAGES CORRESPONDING TO CORRECT WB, SHADE WB, AND INCANDESCENT WB | 615 |

↓

| OBTAIN LOSS BETWEEN RECONSTRUCTED IMAGES CORRESPONDING TO CORRECT WB, SHADE WB, AND INCANDESCENT WB AND GROUND-TRUTH IMAGE | 620 |

↓

| UPDATE PARAMETER OF NEURAL NETWORK IN APPARATUS TO MINIMIZE OBTAINED LOSS | 625 |

# FIG. 7

# FIG. 8

800

OBTAIN INPUT IMAGE WITH ORIGINAL WB CORRECTED BY IMAGE SIGNAL PROCESSING — 805

DOWNSAMPLE OBTAINED INPUT IMAGE — 810

OBTAIN DOWNSAMPLED INTERMEDIATE REPRESENTATION OF DOWNSAMPLED INPUT IMAGE BY USING FIRST NEURAL NETWORK, IN WHICH INTERMEDIATE REPRESENTATION HAS ORIGINAL WB THAT IS NOT CORRECTED BY IMAGE SIGNAL PROCESSING — 815

OBTAIN DOWNSAMPLED OUTPUT IMAGE WITH FIRST WB DIFFERENT FROM ORIGINAL WB BY USING SECOND NEURAL NETWORK, BASED ON OBTAINED DOWNSAMPLED INTERMEDIATE REPRESENTATION — 820

OBTAIN FIRST OUTPUT IMAGE WITH FIRST WB DIFFERENT FROM ORIGINAL WB BY APPLYING COLOR MAPPING TO OBTAINED DOWNSAMPLED OUTPUT IMAGE — 825

# FIG. 9

# FIG. 10

COMPUTER SYSTEM — 1000

| MEMORY — 1010 | PROCESSOR — 1020 |

INPUT/OUTPUT INTERFACE — 1030

DISPLAY — 1040

## FIG. 11

MOBILE DEVICE—1100

- LENS MODULE —1112
- IMAGE SENSING MODULE —1114
- IMAGE SIGNAL PROCESSOR —1116
- CAMERA MODULE —1110
- DISPLAY —1130
- IMAGE SIGNAL PROCESSOR —1116
- USER INTERFACE MODULE —1140
- PROCESSOR —1120
- STORAGE MODULE —1150
- SENSOR MODULE —1160
- ILLUMINANCE SENSING MODULE —1170
- GPS SENSING MODULE —1180
- NETWORK INFORMATION OBTAINING MODULE —1190
- DEMOSAICKING MODULE —1121
- NOISE REDUCTION MODULE —1122
- WHITE-BALANCING CONTROL MODULE —1123
- COLOR SPACE CONVERSION MODULE —1126
- COLOR MANIPULATION MODULE —1127
- IMAGE OUTPUT MODULE —1128

# FIG. 12

INDOOR

OUTDOOR

1210

1220

1205

1200

1240

Excellent

1235

1230

1210

1205

1200

1240

Weak

1235

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080062273 A1
- US 20040126012 A1
- US 20190045163 A1
- US 20160284095 A1
- CN 109348206 A
- US 20150310794 A1
- US 20090067711 A1

**Non-patent literature cited in the description**

- **ZHETONG LIANG et al.** CameraNet: A Two-Stage Framework for Effective Camera ISP Learning. *IEEE Transactions on Image Processing*, 2021, vol. 30, 2248-2262